# EUROPEAN PATENT APPLICATION

(11) **EP 2 996 359 A1**
(43) Date of publication of application: **16.03.2016**
(21) Application number: 14184336.7
(22) Date of filing: 11.09.2014
(51) Int. Cl.: H04W 4/02

(54) **Sending of a directive to a device**

(71) Applicant: Nokia Technologies OY, 02610 Espoo (FI)
(72) Inventor: Nguyen, David, Santa Clara, CA 95051 (US)
(74) Representative: Potter Clarkson LLP

(57) **Abstract**

A method comprising determining an apparatus location that indicates a location of the apparatus, determining an orientation of the apparatus, determining a selection location region based on the orientation of the apparatus and the apparatus location, determining, from a set of device records, a subset of device records such that each device record of the subset of device records comprises a device location record that indicates a device location within the selection location region, causing display of a set of device indicators, each device indicator of the set of device indicators corresponding with a device record of the subset of device records, receiving information indicative of a device selection input that identifies a device indicator as a selected device indicator, and sending a directive to a device identified by a device record that corresponds with the selected device indicator is disclosed.

## Description

### TECHNICAL FIELD

The present application relates generally to sending of a directive to a device.

### BACKGROUND

In recent times, electronic apparatus have become increasingly pervasive in our society. In many circumstances, a user may often interact with a plurality of electronic apparatus and/or electronic apparatus peripherals in performance of various activities, in various contexts, and/or the like. As such, it may be desirable to configure an apparatus such that a user of the apparatus may interact with the user's electronic apparatuses and/or electronic apparatus peripherals in a manner that avoids confusion and delay.

### SUMMARY

Various aspects of examples of the invention are set out in the claims.

One or more embodiments may provide an apparatus, a computer readable medium, a non-transitory computer readable medium, a computer program product, and/or a method for determining an apparatus location that indicates a location of the apparatus, determining an orientation of the apparatus, determining a selection location region based, at least in part, on the orientation of the apparatus and the apparatus location, determining, from a set of device records, a subset of device records such that each device record of the subset of device records comprises a device location record that indicates a device location within the selection location region, causing display of a set of device indicators, each device indicator of the set of device indicators corresponding with a device record of the subset of device records, such that each device indicator is displayed at a position that represents a device location indicated by a device location record comprised by a device record that corresponds with the device indicator, receiving information indicative of a device selection input that identifies a device indicator as a selected device indicator, and sending a directive to a device identified by a device record that corresponds with the selected device indicator.

One or more embodiments may provide an apparatus, a computer readable medium, a computer program product, and/or a non-transitory computer readable medium having means for determining an apparatus location that indicates a location of the apparatus, means for determining an orientation of the apparatus, means for determining a selection location region based, at least in part, on the orientation of the apparatus and the apparatus location, means for determining, from a set of device records, a subset of device records such that each device record of the subset of device records comprises a device location record that indicates a device location within the selection location region, means for causing display of a set of device indicators, each device indicator of the set of device indicators corresponding with a device record of the subset of device records, such that each device indicator is displayed at a position that represents a device location indicated by a device location record comprised by a device record that corresponds with the device indicator, means for receiving information indicative of a device selection input that identifies a device indicator as a selected device indicator, and means for sending a directive to a device identified by a device record that corresponds with the selected device indicator.

An apparatus comprising at least one processor and at least one memory, the memory comprising machine-readable instructions, that when executed cause the apparatus to perform determination of an apparatus location that indicates a location of the apparatus, determination of an orientation of the apparatus, determination of a selection location region based, at least in part, on the orientation of the apparatus and the apparatus location, determination, from a set of device records, a subset of device records such that each device record of the subset of device records comprises a device location record that indicates a device location within the selection location region, causation of display of a set of device indicators, each device indicator of the set of device indicators corresponding with a device record of the subset of device records, such that each device indicator is displayed at a position that represents a device location indicated by a device location record comprised by a device record that corresponds with the device indicator, receipt of information indicative of a device selection input that identifies a device indicator as a selected device indicator, and sending of a directive to a device identified by a device record that corresponds with the selected device indicator.

One or more example embodiments further perform receipt of location information, wherein the determination of the apparatus location is based, at least in part, on the location information.

One or more example embodiments further perform receipt of sensor information, wherein the determination of the orientation of the apparatus is based, at least in part, on the sensor information.

In at least one example embodiment, the orientation of the apparatus indicates a direction that corresponds with a reference direction associated with the apparatus.

In at least one example embodiment, the reference direction is a predetermined direction from a predetermined part of the apparatus.

In at least one example embodiment, the selection location region is a region beyond the apparatus location that extends in a direction that corresponds with the orientation of the apparatus.

In at least one example embodiment, the selection location region is bounded by the apparatus location.

In at least one example embodiment, the selection location region is bounded by a predetermined distance from the apparatus location.

One or more example embodiments further perform Determination of a location of a physical boundary, wherein the selection location region is bounded by the location of the physical boundary.

In at least one example embodiment, the selection location region is bounded by a predetermined angle from the direction that corresponds with the orientation of the apparatus.

In at least one example embodiment, a device record is information stored in memory that correlates a device identity with a device location record.

In at least one example embodiment, the device record correlates the device identity with device communication information.

In at least one example embodiment, device communication information comprises information utilized for the purpose of communicating with a device identified by the device record.

In at least one example embodiment, the device identity uniquely identifies a particular device record within the set of device records.

In at least one example embodiment, the device record correlates the device identity with a set of directive candidates.

In at least one example embodiment, the set of directive candidates comprises information that identifies one or more directives that are selectable for sending to a device that corresponds with the device identity.

In at least one example embodiment, the device record correlates the device identity with a device type.

In at least one example embodiment, the device type comprises information that identifies a physical classification of a device that corresponds with the device identity.

In at least one example embodiment, the physical classification is indicative of at least one user identifiable characteristic of the device that corresponds with the device identity.

In at least one example embodiment, the determination of the subset of device records excludes device records of the set of device records that comprise a device location record that indicates a device location beyond the selection location region.

One or more example embodiments further perform receipt of camera information from a camera module, wherein the selection location region corresponds with at least a portion of the camera information, and causation of display of the portion of the camera information, wherein the causation of display of the set of device indicators is performed such that each device indicator is displayed at a position with respect to the camera information, such that the position represents a device location indicated by a device location record comprised by a device record that corresponds with the device indicator.

One or more example embodiments further perform receipt of map information that corresponds with the selection location region, causation of display of at least a portion of the map information wherein the causation of display of the set of device indicators is performed such that each device indicator is displayed at a position with respect to the map information, such that the position represents a device location indicated by a device location record comprised by a device record that corresponds with the device indicator.

In at least one example embodiment, the device record that corresponds with the selected device indicator comprises a set of directive candidates, and the set of directive candidates comprises the directive.

In at least one example embodiment, a directive candidate indicates an operation that a device is capable of performing.

In at least one example embodiment, a directive candidate indicates an operation that the apparatus is capable of causing a device to perform.

One or more example embodiments further perform causation of display of at least a portion of the set of directive candidates, and receipt of information indicative of a directive candidate selection input that identifies a directive candidate of the set of directive candidates as the directive.

In at least one example embodiment, the sending of the directive to the device identified by the device record that corresponds with the selected device indicator is performed in response to the directive candidate selection input.

One or more example embodiments further perform determination that the information indicative of the directive candidate selection input identifies the directive candidate of the set of directive candidates as the directive, wherein the sending of the directive to the device identified by the device record that corresponds with the selected device indicator is performed in response to the determination that the information indicative of the directive candidate selection input identifies the directive candidate of the set of directive candidates as the directive.

One or more example embodiments further perform determination that the device selection input identifies the device indicator as the selected device indicator, wherein the sending of the directive to the device identified by the device record that corresponds with the selected device indicator is performed in response to the determination that the device selection input identifies the device indicator as the selected device indicator.

One or more example embodiments further perform determination that the location of the apparatus has changed to a different apparatus location, determination of a different selection location region based, at least in part, on the orientation of the apparatus and the different apparatus location, determination, from the set of device records, a different subset of device records such that each device record of the different subset of device records comprises a device location record that indicates a device location within the different selection location region, causation of display of a different set of device indicators, each device indicator of the different set of device indicators corresponding with a device record of the different subset of device records, such that each device indicator is displayed at a position that represents a device location indicated by a device location record comprised by a device record that corresponds with the device indicator, receipt of information indicative of a device selection input that identifies a different device indicator as a different selected device indicator, and sending of a different directive to a different device identified by a device record that corresponds with the different selected device indicator.

One or more example embodiments further perform determination that the orientation of the apparatus has changed to a different orientation of the apparatus, determination of a different selection location region based, at least in part, on the different orientation of the apparatus and the apparatus location, determination, from the set of device records, a different subset of device records such that each device record of the different subset of device records comprises a device location record that indicates a device location within the different selection location region, causation of display of a different set of device indicators, each device indicator of the different set of device indicators corresponding with a device record of the different subset of device records, such that each device indicator is displayed at a position that represents a device location indicated by a device location record comprised by a device record that corresponds with the device indicator, receipt of information indicative of a device selection input that identifies a different device indicator as a different selected device indicator, and sending of a different directive to a different device identified by a device record that corresponds with the different selected device indicator.

In at least one example embodiment, the directive is a communication that is configured to cause a device to perform a designated operation.

In at least one example embodiment, at least one device indicator of the set of device indicators represents a device type comprised by a device record that corresponds with the device indicator.

### BRIEF DESCRIPTION OF THE DRAWINGS

For a more complete understanding of embodiments of the invention, reference is now made to the following descriptions taken in connection with the accompanying drawings in which:
FIGURE 1 is a block diagram showing an apparatus according to at least one example embodiment;
FIGURES 2A-2B are diagrams illustrating apparatus and device communication according to at least one example embodiment;
FIGURES 3A-3C are diagrams illustrating displays according to at least one example embodiment;
FIGURES 4A-4C are diagrams illustrating an apparatus location according to at least one example embodiment;
FIGURE 4D is an interaction diagram illustrating activities associated with sending a directive to a device according to at least one example embodiment;
FIGURES 5A-5C are diagrams illustrating a set of device records according to at least one example embodiment;
FIGURES 6A-6E are diagrams illustrating a selection location region according to at least one example embodiment;
FIGURES 7A-7C are diagrams illustrating display of a set of device indicators according to at least one example embodiment;
FIGURES 8A-8C are diagrams illustrating display of a set of device indicators according to at least one example embodiment;
FIGURE 9 is a flow diagram illustrating activities associated with sending of a directive to a device according to at least one example embodiment;
FIGURE 10 is a flow diagram illustrating activities associated with display of a set of device indicators according to at least one example embodiment;
FIGURE 11 is a flow diagram illustrating activities associated with display of a set of device indicators according to at least one example embodiment;
FIGURE 12 is a flow diagram illustrating activities associated with display of a set of directive candidates according to at least one example embodiment;
FIGURE 13 is a flow diagram illustrating activities associated with determination of an apparatus location according to at least one example embodiment; and
FIGURE 14 is a flow diagram illustrating activities associated with determination of an orientation of an apparatus according to at least one example embodiment.

### DETAILED DESCRIPTION OF THE DRAWINGS

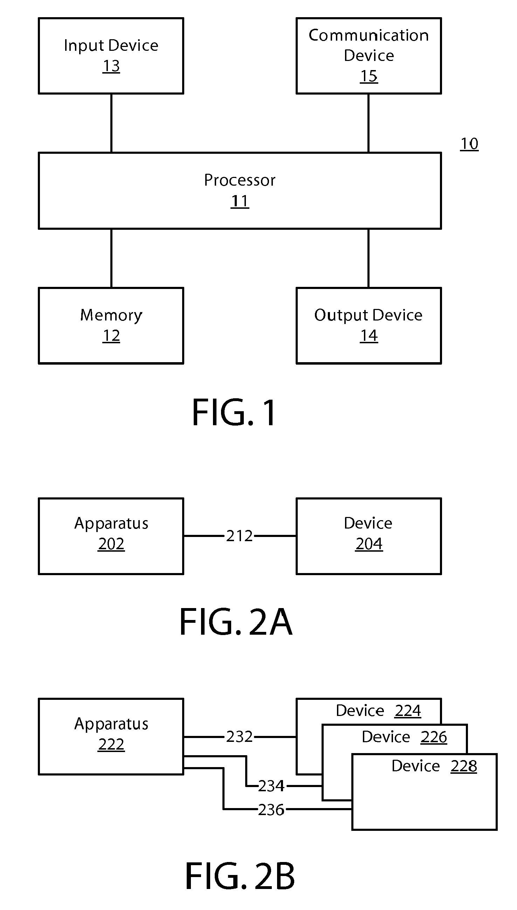

An embodiment of the invention and its potential advantages are understood by referring to FIGURES 1 through 14 of the drawings.

Some embodiments will now be described more fully hereinafter with reference to the accompanying drawings, in which some, but not all, embodiments are shown. Various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network apparatus, other network apparatus, and/or other computing apparatus.

As defined herein, a "non-transitory computer-readable medium," which refers to a physical medium (e.g., volatile or non-volatile memory device), can be differentiated from a "transitory computer-readable medium," which refers to an electromagnetic signal.

FIGURE 1 is a block diagram showing an apparatus, such as an electronic apparatus 10, according to at least one example embodiment. It should be understood, however, that an electronic apparatus as illustrated and hereinafter described is merely illustrative of an electronic apparatus that could benefit from embodiments of the invention and, therefore, should not be taken to limit the scope of the invention. While electronic apparatus 10 is illustrated and will be hereinafter described for purposes of example, other types of electronic apparatuses may readily employ embodiments of the invention. Electronic apparatus 10 may be a personal digital assistant (PDAs), a pager, a mobile computer, a gaming apparatus, a laptop computer, a tablet computer, a media player, a camera, a video recorder, a mobile phone, a global positioning system (GPS) apparatus, a head mounted display, a wearable device, a remote control, and/or any other types of electronic systems. Moreover, the apparatus of at least one example embodiment need not be the entire electronic apparatus, but may be a component or group of components of the electronic apparatus in other example embodiments. For example, the apparatus may be an integrated circuit, a set of integrated circuits, and/or the like.

Even though embodiments of the invention may be described in conjunction with mobile applications, it should be understood that embodiments of the invention may be utilized in conjunction with a variety of other applications, both in the mobile communications industries and outside of the mobile communications industries. For example, the apparatus may be, at least part of, a non-mobile communications apparatus, such as a home automation console, a media player remote control, and/or the like.

In at least one example embodiment, electronic apparatus 10 comprises processor 11 and memory 12. Processor 11 may be any type of processor, controller, embedded controller, processor core, and/or the like. In at least one example embodiment, processor 11 utilizes computer program code to cause an apparatus to perform one or more actions. Memory 12 may comprise volatile memory, such as volatile Random Access Memory (RAM) including a cache area for the temporary storage of data and/or other memory, for example, non-volatile memory, which may be embedded and/or may be removable. The non-volatile memory may comprise an EEPROM, flash memory and/or the like. Memory 12 may store any of a number of pieces of information, and data. The information and data may be used by the electronic apparatus 10 to implement one or more functions of the electronic apparatus 10, such as the functions described herein. In at least one example embodiment, memory 12 includes computer program code such that the memory and the computer program code are configured to, working with the processor, cause the apparatus to perform one or more actions described herein.

The electronic apparatus 10 may further comprise a communication device 15. In at least one example embodiment, communication device 15 comprises an antenna, (or multiple antennae), a wired connector, and/or the like in operable communication with a transmitter and/or a receiver. In at least one example embodiment, processor 11 provides signals to a transmitter and/or receives signals from a receiver. The signals may comprise signaling information in accordance with a communications interface standard, user speech, received data, user generated data, and/or the like. Communication device 15 may operate with one or more air interface standards, communication protocols, modulation types, and access types. By way of illustration, the electronic communication device 15 may operate in accordance with second-generation (2G) wireless communication protocols IS-136 (time division multiple access (TDMA)), Global System for Mobile communications (GSM), and IS-95 (code division multiple access (CDMA)), with third-generation (3G) wireless communication protocols, such as Universal Mobile Telecommunications System (UMTS), CDMA2000, wideband CDMA (WCDMA) and time division-synchronous CDMA (TD-SCDMA), and/or with fourth-generation (4G) wireless communication protocols, wireless networking protocols, such as 802.11, short-range wireless protocols, such as Bluetooth, and/or the like. Communication device 15 may operate in accordance with wireline protocols, such as Ethernet, digital subscriber line (DSL), asynchronous transfer mode (ATM), and/or the like.

Processor 11 may comprise means, such as circuitry, for implementing audio, video, communication, navigation, logic functions, and/or the like, as well as for implementing embodiments of the invention including, for example, one or more of the functions described herein. For example, processor 11 may comprise means, such as a digital signal processor device, a microprocessor device, various analog to digital converters, digital to analog converters, processing circuitry and other support circuits, for performing various functions including, for example, one or more of the functions described herein. The apparatus may perform control and signal processing functions of the electronic apparatus 10 among these devices according to their respective capabilities. The processor 11 thus may comprise the functionality to encode and interleave message and data prior to modulation and transmission. The processor 1 may additionally comprise an internal voice coder, and may comprise an internal data modem. Further, the processor 11 may comprise functionality to operate one or more software programs, which may be stored in memory and which may, among other things, cause the processor 11 to implement at least one embodiment including, for example, one or more of the functions described herein. For example, the processor 11 may operate a connectivity program, such as a conventional internet browser. The connectivity program may allow the electronic apparatus 10 to transmit and receive internet content, such as location-based content and/or other web page content, according to a Transmission Control Protocol (TCP), Internet Protocol (IP), User Datagram Protocol (UDP), Internet Message Access Protocol (IMAP), Post Office Protocol (POP), Simple Mail Transfer Protocol (SMTP), Wireless Application Protocol (WAP), Hypertext Transfer Protocol (HTTP), and/or the like, for example.

The electronic apparatus 10 may comprise a user interface for providing output and/or receiving input. The electronic apparatus 10 may comprise an output device 14. Output device 14 may comprise an audio output device, such as a ringer, an earphone, a speaker, and/or the like. Output device 14 may comprise a tactile output device, such as a vibration transducer, an electronically deformable surface, an electronically deformable structure, and/or the like. Output device 14 may comprise a visual output device, such as a display, a light, and/or the like. In at least one example embodiment, the apparatus causes display of information, the causation of display may comprise displaying the information on a display comprised by the apparatus, sending the information to a separate apparatus, and/or the like. For example, the apparatus may send the information to a separate display, to a computer, to a laptop, to a mobile apparatus, and/or the like. For example, the apparatus may be a server that causes display of the information by way of sending the information to a client apparatus that displays the information. In this manner, causation of display of the information may comprise sending one or more messages to the separate apparatus that comprise the information, streaming the information to the separate apparatus, and/or the like. The electronic apparatus may comprise an input device 13. Input device 13 may comprise a light sensor, a proximity sensor, a microphone, a touch sensor, a force sensor, a button, a keypad, a motion sensor, a magnetic field sensor, a camera, and/or the like. A touch sensor and a display may be characterized as a touch display. In an embodiment comprising a touch display, the touch display may be configured to receive input from a single point of contact, multiple points of contact, and/or the like. In such an embodiment, the touch display and/or the processor may determine input based, at least in part, on position, motion, speed, contact area, and/or the like. In at least one example embodiment, the apparatus receives an indication of an input. The apparatus may receive the indication from a sensor, a driver, a separate apparatus, and/or the like. The information indicative of the input may comprise information that conveys information indicative of the input, indicative of an aspect of the input indicative of occurrence of the input, and/or the like.

The electronic apparatus 10 may include any of a variety of touch displays including those that are configured to enable touch recognition by any of resistive, capacitive, infrared, strain gauge, surface wave, optical imaging, dispersive signal technology, acoustic pulse recognition, or other techniques, and to then provide signals indicative of the location and other parameters associated with the touch. Additionally, the touch display may be configured to receive an indication of an input in the form of a touch event which may be defined as an actual physical contact between a selection object (e.g., a finger, stylus, pen, pencil, or other pointing device) and the touch display. Alternatively, a touch event may be defined as bringing the selection object in proximity to the touch display, hovering over a displayed object or approaching an object within a predefined distance, even though physical contact is not made with the touch display. As such, a touch input may comprise any input that is detected by a touch display including touch events that involve actual physical contact and touch events that do not involve physical contact but that are otherwise detected by the touch display, such as a result of the proximity of the selection object to the touch display. A touch display may be capable of receiving information associated with force applied to the touch screen in relation to the touch input. For example, the touch screen may differentiate between a heavy press touch input and a light press touch input. In at least one example embodiment, a display may display two-dimensional information, three-dimensional information and/or the like.

In embodiments including a keypad, the keypad may comprise numeric (for example, 0-9) keys, symbol keys (for example, #, *), alphabetic keys, and/or the like for operating the electronic apparatus 10. For example, the keypad may comprise a conventional QWERTY keypad arrangement. The keypad may also comprise various soft keys with associated functions. In addition, or alternatively, the electronic apparatus 10 may comprise an interface device such as a joystick or other user input interface.

Input device 13 may comprise a media capturing element. The media capturing element may be any means for capturing an image, video, and/or audio for storage, display, or transmission. For example, in at least one example embodiment in which the media capturing element is a camera module, the camera module may comprise a digital camera which may form a digital image file from a captured image. As such, the camera module may comprise hardware, such as a lens or other optical component(s), and/or software necessary for creating a digital image file from a captured image. Alternatively, the camera module may comprise only the hardware for viewing an image, while a memory device of the electronic apparatus 10 stores instructions for execution by the processor 11 in the form of software for creating a digital image file from a captured image. In at least one example embodiment, the camera module may further comprise a processing element such as a co-processor that assists the processor 11 in processing image data and an encoder and/or decoder for compressing and/or decompressing image data. The encoder and/or decoder may encode and/or decode according to a standard format, for example, a Joint Photographic Experts Group (JPEG) standard format.

FIGURES 2A-2B are diagrams illustrating apparatus and device communication according to at least one example embodiment. The examples of FIGURES 2A-2B are merely examples and do not limit the scope of the claims. For example, device count may vary, apparatus configuration may vary, communication channels may vary, and/or the like.

FIGURE 2A is a diagram illustrating apparatus and device communication according to at least one example embodiment. In the example of FIGURE 2A, apparatus 202 is a primary electronic apparatus. A primary electronic apparatus may be an electronic apparatus that a user commonly utilizes to perform various tasks, functions, and/or the like. For example, a primary electronic apparatus may be a phone, a tablet, a computer, a watch, and/or the like. In the example of FIGURE 2A, device 204 is a secondary electronic device. A secondary electronic device may be an electronic device that a user often utilizes in conjunction with a primary electronic apparatus. For example, a secondary electronic device may be a device such as an alarm clock, a light, a thermostat, an appliance, a headset, a display, a monitor, a watch, another primary electronic apparatus, and/or the like. Although the aforementioned example describes apparatus 202 and device 204 as distinct types of apparatuses, namely, a primary electronic apparatus and a secondary electronic device, in some circumstances, the apparatuses may both be primary electronic apparatuses, both be secondary electronic devices, and/or the like. In the example of FIGURE 2A, apparatus 202 communicates with device 204 by way of communication channel 212. For example, apparatus 202 may send information to device 204 by way of communication channel 212, apparatus 202 may receive information sent from device 204 by way of communication channel 212, and/or the like. A communication channel, for example, may be a channel utilized for sending and/or receiving of information, data, communications, and/or the like, between two or more apparatuses, two or more devices, an apparatus and a device, and/or the like. It should be understood that, even though the example of FIGURE 2A illustrates a direct communication channel between apparatus 202 and device 204, there may be intermediate apparatuses and/or devices that facilitate communication between apparatus 202 and device 204. For example, there may be one or more routers, hubs, switches, gateways, and/or the like, that are utilized in the communication channels between apparatus 202 and device 204. In addition, there may be other separate apparatuses and/or devices that apparatus 202 and/or device 204 are in communication with. For example, apparatus 202 and/or device 204 may be in communication with another apparatus, a separate apparatus, a different apparatus, another device, a separate device, a different device, and/or the like.

In some circumstances, a user may desire to have collaboration between apparatuses and devices, such as between an apparatus and a device, based on their proximity with each other. For example, it may be intuitive for a user to manage collaboration between apparatuses and devices that are local to each other. A plurality of apparatuses and/or devices may be proximate to each other based on location, availability of local communication among the apparatuses and devices, and/or the like. For example, if the apparatuses and/or devices collaborate by way of low power radio frequency communication, a radio frequency communication, near field communication, inductive communication, electric field communication, Bluetooth communication, infrared communication, local area network communication, wireless local area network communication, local port communication, input/output port communication, and/or the like, the apparatuses may be considered to be proximate with each other based, at least in part, on availability of such proximity-based communication with each other. In at least one example embodiment, an apparatus may be a phone, a tablet, a computer, a wearable apparatus, a head worn apparatus, a hand worn apparatus, an electronic apparatus, a peripheral apparatus, a host apparatus, and/or the like. In at least one example embodiment, a device may be a light, an appliance, a thermostat, a control panel, a display, and/or the like. In at least one example embodiment, apparatuses and/or devices communicate with each other. For example, an apparatus may be an apparatus that automatically communicates with device for purposes such as identifying the device, synchronizing data, exchanging status information, and/or the like. In at least one example embodiment, an apparatus retains information associated with communication with a device. For example, the apparatus may comprise information associated with identifying, communicating with, authenticating, performing authentication with, and/or the like, the device. In this manner, the apparatus may be privileged to perform operations in conjunction with the device that a different apparatus may lack the privilege to perform. For example, the apparatus may be privileged to access specific information that may be stored on the device, cause the device to perform one or more operations in response to a directive communicated to the device, and/or the like.

In at least one example embodiment, communication based, at least in part, on short range communication is referred to as proximity-based communication. In at least one example embodiment, proximity-based communication relates to wireless communication that is associated with a short range, such as low power radio frequency communication, radio frequency communication, near field communication, inductive communication, electric field communication, Bluetooth communication, infrared communication, local area network communication, wireless local area network communication, local port communication, input/output port communication, and/or the like. In such an example, the exchange of information may be by way of the short range wireless communication between the apparatus and a separate apparatus, host apparatus, and/or the like.

In at least one example embodiment, a proximity-based communication channel is a low power radio frequency communication channel, a radio frequency communication channel, a near field communication channel, a wireless communication channel, a wireless local area network communication channel, a Bluetooth communication channel, an electric field communication channel, an inductive communication channel, an infrared communication channel, and/or the like. For example, as depicted in FIGURE 2A, apparatus 202 communicates with apparatus 204 by way of a communication channel 212. In the example of FIGURE 2A, communication channel 212 may be a low power radio frequency communication channel, a radio frequency communication channel, a near field communication channel, a wireless communication channel, a wireless local area network communication channel, a Bluetooth communication channel, an electric field communication channel, an inductive communication channel, an infrared communication channel, and/or the like.

In at least one example embodiment, an apparatus and a device communicate by way of non-proximity-based communication channels. For example, as depicted in FIGURE 2A, apparatus 202 communicates with device 204 by way of communication channel 212. In the example of FIGURE 2A, communication channel 212 may be a local area network communication channel, a wide area network communication channel, an internet communication channel, a cellular communication channel, and/or the like.

In modern times, it is common for a user to have multiple electronic apparatuses and/or devices that the user selectively utilizes. For example, the user may have multiple primary electronic apparatuses, multiple secondary electronic devices, and/or the like. For example, a user may commonly utilize a particular primary electronic apparatus in conjunction with one of several secondary electronic devices, a plurality of secondary electronic devices, and/or the like.

FIGURE 2B is a diagram illustrating apparatus communication according to at least one example embodiment. In the example of FIGURE 2B, apparatus 222 is a primary electronic apparatus. In the example of FIGURE 2B, devices 224, 226, and 228 are secondary electronic devices. In the example of FIGURE 2B, a user of apparatus 222 may desire to utilize apparatus 222 in conjunction with one or more secondary electronic devices, such as device 224, 226, 228, and/or the like. As such, the user may desire to indicate such a desire to cause establishment of a communication channel between apparatus 222 and one or more secondary electronic devices, such as device 224, 226, 228, and/or the like.

In the example of FIGURE 2B, apparatus 222 communicates with device 224 by way of communication channel 232. For example, apparatus 222 may send information to device 224 by way of communication channel 232, apparatus 222 may receive information sent from device 224 by way of communication channel 232, and/or the like. In the example of FIGURE 2B, communication channel 232 may be similar as described regarding communication channel 212 of FIGURE 2A. It should be understood that, even though the example of FIGURE 2B illustrates a direct communication channel between apparatus 222 and device 224, there may be intermediate apparatuses that facilitate communication between apparatus 222 and device 224. For example, there may be one or more routers, hubs, switches, gateways, and/or the like, that are utilized in the communication channels between apparatus 222 and apparatus 224. In addition, there may be other separate apparatuses that apparatus 222 and/or apparatus 224 are in communication with. For example, apparatus 222 and/or device 224 may be in communication with another apparatus, a separate apparatus, a different apparatus, another device, a separate device, a different device, and/or the like. For example, apparatus 222 may be in communication with device 226 by way of communication channel 234, device 228 by way of communication channel 236, and/or the like. In the example of FIGURE 2B, communication channel 234 and communication channel 236 may be similar as described regarding communication channel 212 of FIGURE 2A. In another example, device 228 may be in communication with apparatus 222, device 224, device 226, and/or the like.

Although the example of FIGURE 2B describes apparatus 222 as a primary electronic apparatus and devices 224, 226, and 228 as secondary electronic devices, in some circumstances, all apparatuses and/or devices may be primary electronic apparatuses, all apparatuses and/or devices may be secondary electronic devices, apparatus 222 may be a secondary electronic device, any of devices 224, 226, and/or 228 may be primary electronic apparatuses, and/or the like.

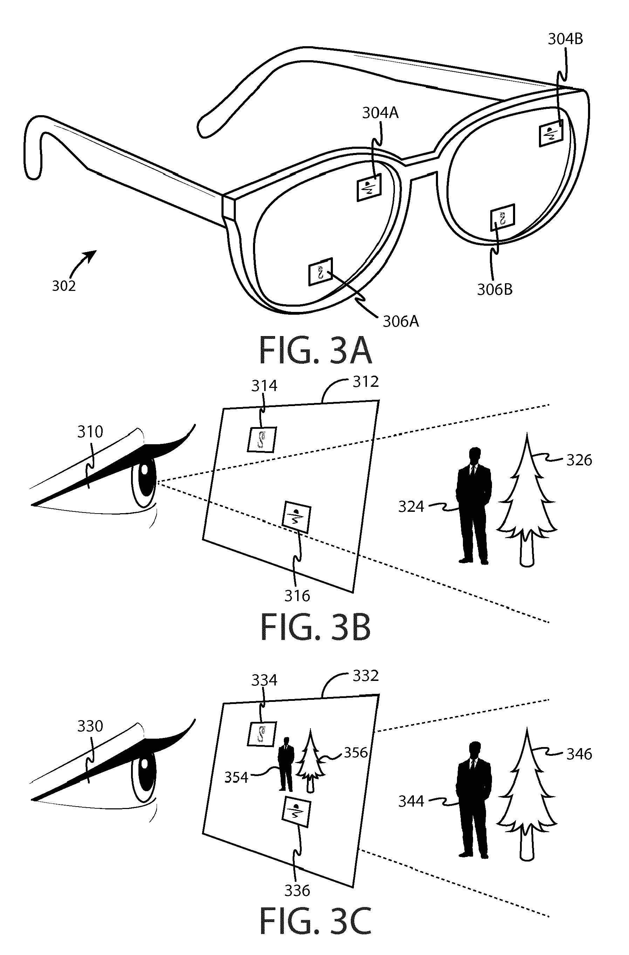

FIGURES 3A-3C are diagrams illustrating displays according to at least one example embodiment. The examples of FIGURES 3A-3C are merely examples and do not limit the scope of the claims. For example, the display type may vary, the configuration of the display may vary, the shape of the display may vary, and/or the like.

In many circumstances, a user may desire to interact with an electronic device. In such circumstances, it may often be desirable for the user to interact with an electronic apparatus by way of a display. For example, the user may interact with a program interaction screen associated with a program. In some circumstances, it may be desirable for a display to be a see through display. In at least one example embodiment, a see through display is a display that presents information to a user, but through which objects on an opposite side of the display from the user may be seen. A see through display may be comprised by a window, a windshield, a visor, glasses, a head mounted display, and/or the like. A head mounted display may, for example, be a display that is head mountable, a display that is coupled to an element that is wearable at a location on and/or proximate to the head of a user, a display that is wearable at a location on and/or proximate to the head of a user, and/or the like.

FIGURE 3A is a diagram illustrating display 302 according to at least one example embodiment. In the example of FIGURE 3A, display 302 is illustrated as a see through display, though display 302 may be any type of display. For example, display 302 may be a non-see through display. In at least one example embodiment, a see through display is a near eye display. A near eye display may be a see through display that is positioned proximate to an eye of the user. The example of FIGURE 3A illustrates display 302 as glasses that comprise a near eye display in each lens. In the example of FIGURE 3A, the right near eye display is displaying information 304A and 306A, and the left near eye display is displaying information 304B and 306B. In at least one example embodiment, information 304A may be associated with information 304B. For example, the content of information 304A may be identical to content of information 304B. In some circumstances, even though the content may be identical between 304A and 304B, position of information 304A on the right near eye display may vary from position of information 304B on the left near eye display. In this manner, the apparatus may vary position of information between the left near eye display and right near eye display to vary the parallax of the information perceived by the user. In this manner, the apparatus may vary the perceived depth of the information by the user.

FIGURE 3B is a diagram illustrating see through display 312 according to at least one example embodiment. In at least one example embodiment, displaying information on a see through display so that the information corresponds with one or more objects viewable through the see through display is referred to as augmented reality. In the example of FIGURE 3B, user 310 may perceive objects 324 and 326 through see through display 312. In at least one example embodiment, the see through display may display information to the user. For example, display 312 may display information 314 and information 316. Information 314 and information 316 may be positioned on display 312 such that the information corresponds with one or more objects viewable through see through display312, such as object 324. In such an example, information 314 may be associated with, identify, and/or the like, object 324. For example, information 314 may indicate an identity of object 324. In at least one example embodiment, display 312 may be comprised by a head mounted display.

FIGURE 3C is a diagram illustrating display 332 according to at least one example embodiment. In at least one example embodiment, displaying information on a display so that the information corresponds with one or more representations of objects displayed on the display is referred to as augmented reality. In some circumstances, a representation of an object may refer to an image of an object. For example, a camera module may capture camera information that comprises information indicative of the object. The camera information may comprise video information, image information, and/or the like. This camera information may then be displayed on a display such that the camera information is a representation of the object. In the example of FIGURE 3C, user 330 may perceive representations 354 and 356 displayed on display 332. Representations 354 and 356 may be images of objects captured by an apparatus. For example, a camera module may capture camera information indicative of objects 344 and 346 such that the camera information is displayed on display 332 as representations 354 and 356. In at least one example embodiment, the display may display information to the user. For example, display 332 may display information 334 and information 336. Information 334 and information 336 may be positioned on display 332 such that the information corresponds with one or more representations of objects displayed on display 332, such as representation 354. In such an example, information 334 may be associated with, identify, and/or the like, representation 354. For example, information 334 may indicate an identity of representation 354. In at least one example embodiment, display 332 may be comprised by a head mounted display.

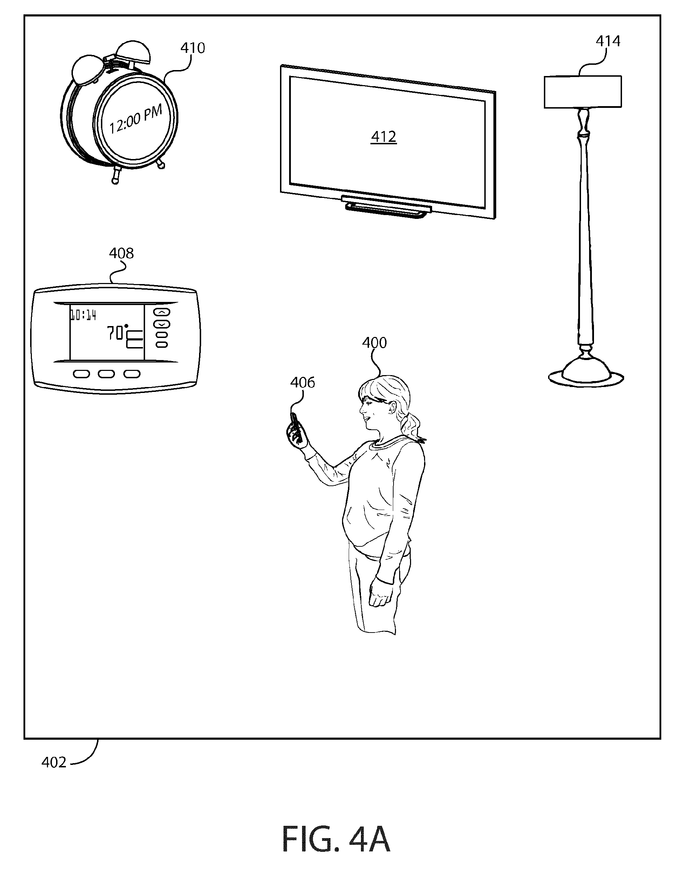

FIGURES 4A-4C are diagrams illustrating an apparatus location according to at least one example embodiment. The examples of FIGURES 4A-4C are merely examples and do not limit the scope of the claims. For example, the apparatus location may vary, the orientation of the apparatus may vary, the size of the location may vary, and/or the like.

As previously described, oftentimes a user may wish utilize an apparatus in conjunction with various devices over communication channels. For example, the apparatus and the devices may be in communication within the same network, may be in communication across multiple network, a private network, and/or the like.. In this manner, the apparatus and the devices may be interconnected as a part of the Internet of Things. For instance, a user may communicate with, share information with, and control various devices from an apparatus. As the number of devices on a network, such as the Internet of Things, a private network, and/or the like grows, it may be desirable for an apparatus to determine an apparatus location that indicates a location of the apparatus. For example, the apparatus may utilize the apparatus location to determine which devices a user is most likely to interact with. In this manner, the apparatus may allow the user to interact with various devices in an efficient manner. In at least on example embodiment, an apparatus location indicates a location of an apparatus. In at least one example embodiment, a location of an apparatus refers to a physical location of an apparatus. For example, a location of an apparatus may be a particular room in a building, a particular address in a city, within a particular vehicle, a particular longitude and/or latitude, and/or the like. In at least one example embodiment, the apparatus receives location information. In this manner, the determination of the apparatus location may be based, at least in part, on the location information. Location information may refer to any information received by the apparatus to determine apparatus location, such as information from a sensor, a global positioning system receiver, a radio triangulation operation, a location service, a location database, and/or the like. For example, the apparatus may receive location information from an indoor location service, an assisted location service, high accuracy indoor positioning (HAIP), and/or the like. It should be understood that many manners exist for determining location information. In addition, many manners for determining location information may be developed in the future. The manner in which the location information is determined does not necessarily limit the claims.

FIGURE 4A illustrates user 400 interacting with apparatus 406 within the boundaries of location 402. Location 402 may be any type of location, such as a room, a building, a range of locations, a geographic region, an address, and/or the like. Apparatus 406 may be any type of electronic apparatus. For example, apparatus 406 may be similar to apparatus 10 of FIGURE 1, apparatus 202 of FIGURE 2A, apparatus 222 of FIGURE 2B, and/or the like. Additionally FIGURE 4A illustrates devices 408, 410, 412, and 414 within the boundaries of location 402. Devices 408, 410, 412, and 414 may be any type of electronic devices. For example, device 408 may be similar to device 204 of FIGURE 2A, devices 224, 226, and 228 of FIGURE 2B, and/or the like. In the example of FIGURE 4A, apparatus 406 may communicate with devices 408, 410, 412, and 414 similarly as described regarding FIGURES 2A-2B.

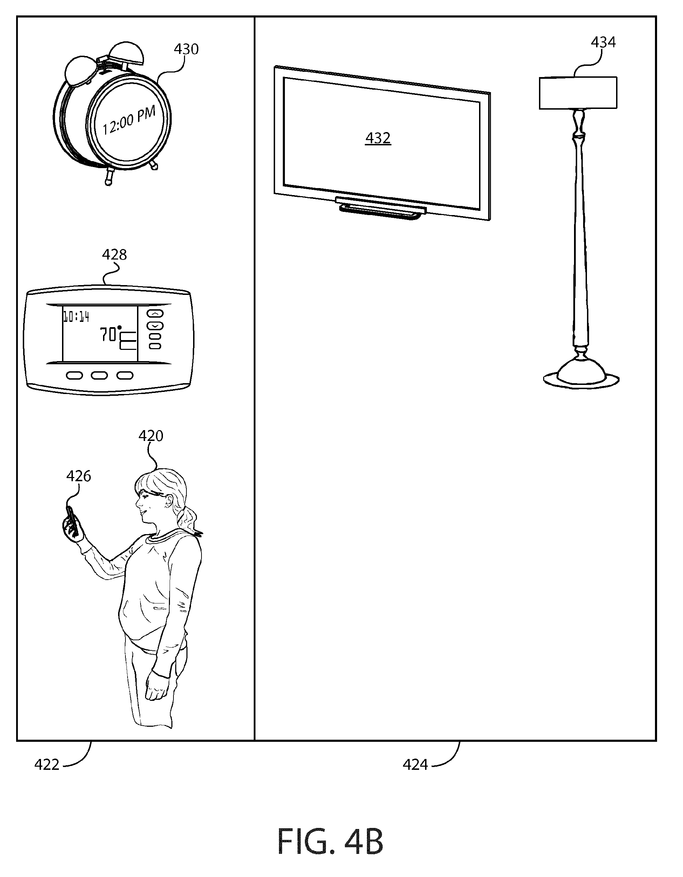

In some circumstances, an apparatus may have an apparatus location near another location. For example, an apparatus may be within the boundaries of a room that is adjacent to a different room. In circumstances such as these, the apparatus may be able to communicate with devices that are within the boundaries of the other location by way of one or more communication channels. FIGURE 4B illustrates user 420 interacting with apparatus 426 within the boundaries of location 422. Apparatus 426 may be any type of electronics apparatus. For example, apparatus 426 may be similar to apparatus 10 of FIGURE 1, apparatus 202 of FIGURE 2A, apparatus 222 of FIGURE 2B, and/or the like. Additionally FIGURE 4B illustrates devices 428 and 430, within the boundaries of location 422, and devices 432 and 434 within the boundaries of location 424. In the example of FIGURE 4B, locations 422 and 424 may be any type of location, similar as described regarding location 402 of FIGURE 2A. It should be understood, in the example of FIGURE 4B, that the boundary between location 422 and location 424 is a physical boundary. For example, the boundary between location 422 and location 323 may be an interior wall, a door, an exterior wall, a fence, and/or the like. Devices 428, 430, 432, and 434 may be any type of electronic devices. For example, device 428 may be similar to device 204 of FIGURE 2A, devices 224, 226, and 228 of FIGURE 2B, and/or the like. In the example of FIGURE 4B, apparatus 426 may communicate with devices 428, 430, 432, and 434 similarly as described regarding FIGURES 2A-2B.

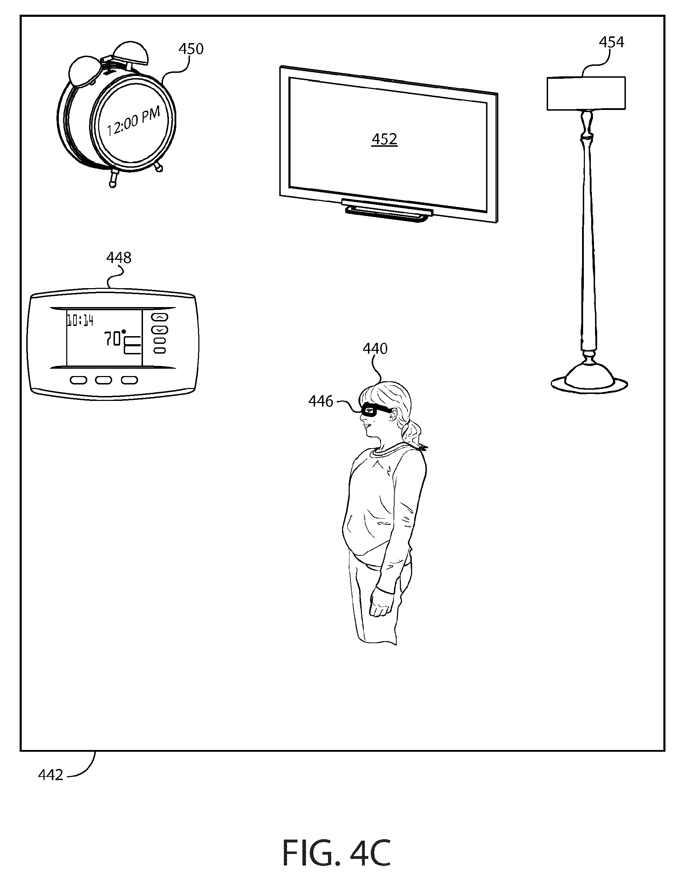

As previously described, in some circumstances, an apparatus may comprise a see through display. FIGURE 4C illustrates user 440 interacting with apparatus 446 within the boundaries of location 442. In the example of FIGURE 4C, locations 442 may be any type of location, similar as described regarding location 402 of FIGURE 2A. Although apparatus 446 is illustrated as a head mounted apparatus comprising a see through display in the example of FIGURE 4C, apparatus 446 may be any type of electronic apparatus comprising display. For example, apparatus 446 may be similar to display 302 of FIGURE 3A, display 312 of FIGURE 3B, display 330 of FIGURE 3C, and/or the like. As can be seen, the example of FIGURE 4C illustrates devices 448, 450, 452, and 454 within the boundaries of location 442. Devices 448, 450, 452, and 454 may be any type of electronic devices. For example, device 448 may be similar to device 204 of FIGURE 2A, devices 224, 226, and 228 of FIGURE 2B, and/or the like. In the example of FIGURE 4C, apparatus 446 may communicate with devices 448, 450, 452, and 454 similarly as described regarding FIGURES 2A-2B.

In some circumstances, it may be desirable for an apparatus to determine an orientation the apparatus. For example, the apparatus may utilize the apparatus orientation to determine which devices a user is most likely to interact with. For example, an apparatus may have a front side, a top side, and/or the like. In at least one example embodiment, orientation of an apparatus refers to the physical position of an apparatus with respect to the surroundings of the apparatus. For example, a user may orient the apparatus so a particular side, such as the front side, is pointed towards a particular device or plurality of devices. For example, user 446 of FIGURE 4C may orient apparatus 446 such that a front side of apparatus 446 is pointed towards device 448. In this manner, the apparatus may allow the user to interact with various devices in an efficient way. In at least one example embodiment, the apparatus receives sensor information. In this manner, the determination of the orientation of the apparatus may be based, at least in part, on the sensor information. Sensor information may refer to any information received by the apparatus from a sensor to determine the orientation of the apparatus, such as information from an accelerometer, a global positioning system receiver, a compass, an orientation sensor, a camera module, and/or the like.

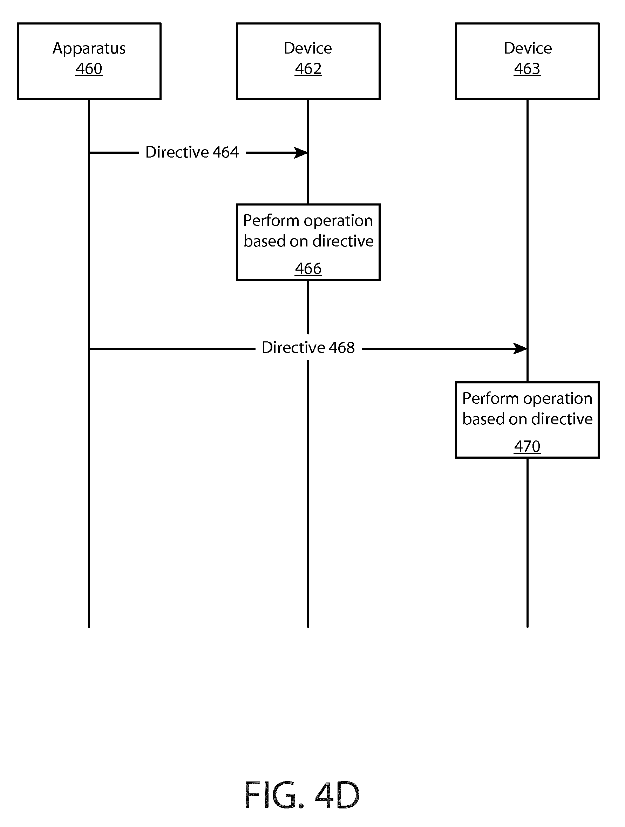

FIGURE 4D is an interaction diagram illustrating activities associated with sending a directive to a device according to at least one example embodiment. In at least one example embodiment, there is a set of operations that corresponds with, at least some of, the activities of FIGURE 4D. For example, there may be a set of operations associated with activities of one or more apparatuses of FIGURE 4D. An apparatus, for example electronic apparatus 10 of FIGURE 1, or a portion thereof, apparatus 202 of FIGURE 2A, or a portion thereof, device 204 of FIGURE 2A, or a portion thereof, apparatus 222 of FIGURE 2B, or a portion thereof, device 224 of FIGURE 2B, or a portion thereof, device 226 of FIGURE 2B, or device 228 of FIGURE 2B, or a portion thereof may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 4D.

In some circumstances, it may be desirable for an apparatus to send a directive to a device. For example, a user of an apparatus may desire to control a device that has established a communication channel with the apparatus. For example, in the example of FIGURE 4A, user 400 may wish to control device 408 by way of apparatus 406. In some circumstances, such controlling of device 408 may be accomplished by an interaction between user 400 and apparatus 406 such that apparatus 406 sends a directive to device 408. In this manner, user 400 may control device 408 remotely. In at least one example embodiment, a directive is a communication that is configured to cause a device to perform a designated operation. For example, if the device is a light, the directive may cause the light to perform a turn on operation, a turn off operation, a dim operation, a brighten operation, and/or the like, by designating such an operation.

In the example of FIGURE 4D, apparatus 460 may be similar as described regarding apparatus 10 of FIGURE 1, apparatus 202 of FIGURE 2A, apparatus 222 of FIGURE 2B, and/or the like. In the example of FIGURE 4D, devices 462 and 463 may be similar as described regarding device 204 of FIGURE 2A, devices 224, 226, and 228 of FIGURE 2B, and/or the like

At interaction 464, apparatus 460 sends a directive to device 462. In this manner, device 462 may perform an operation based, at least in part, on the directive received from apparatus 460.

At interaction 466, device 462 performs an operation based, at least in part, on the directive sent by apparatus 460.

At interaction 468, apparatus 460 sends a directive to device 463. In this manner, device 463 may perform an operation based, at least in part, on the directive received from apparatus 460.

At interaction 470, device 463 performs an operation based, at least in part, on the directive sent by apparatus 460.

For example, apparatus 460 may be a tablet apparatus, device 462 may be a lighting device, and device 463 may be a thermostat device. In such an example, apparatus 460 may send a directive to device 462 to perform a dim operation and, in response to the directive, device 462 may perform the dim operation. Similarly, in such an example, apparatus 460 may send a directive to device 463 to perform a change set point operation and, in response to the directive, device 463 may perform the change set point operation.

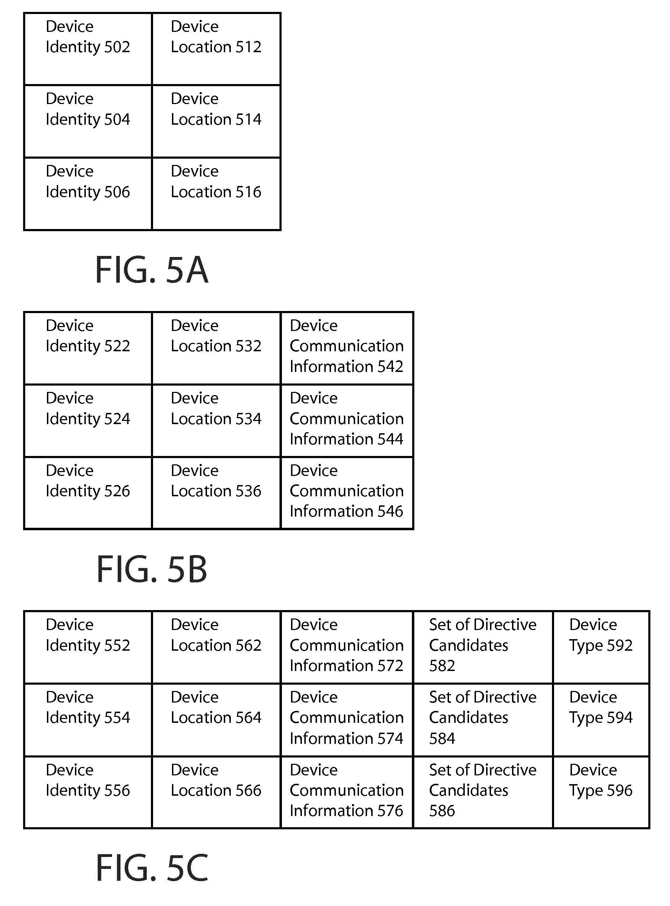

FIGURES 5A-5C are diagrams illustrating a set of device records according to at least one example embodiment. The examples of FIGURES 5A-5C are merely examples and do not limit the scope of the claims. For example, the number of records may vary, the format of the records may vary, the types of records may vary, and/or the like.

As previously described, in some circumstances, an apparatus may utilize an apparatus location to determine which devices a user is most likely to interact with. In some circumstances, it may be desirable for the apparatus to utilize device records to assist in such a determination. Such device records may comprise device location records. In at least one example embodiment, a device record is information stored in memory that correlates a device identity with a device location record. For example, device records may be stored in memory comprised by the apparatus, stored in memory comprised by a separate apparatus, stored in memory comprised by a device, stored in memory of a network server, stored in cloud based memory, and/or the like. In this manner, device records may be received from memory comprised by the apparatus, from a separate apparatus, from a device, from a network server, from cloud-based memory, and/or the like. A device identity may refer to information that uniquely identifies a device record. For example, the device identity may comprise identification information that uniquely identifies a specific device, and the device record may comprise the identification information such that the device record associated with the specific device may be identified by way of the identification information. In this manner, a device identity may uniquely identify a particular device record within a set of device records. For example, a device record may exist for each of devices 408, 410, and 412 of FIGURE 4A. A device identity for each device record may uniquely identify a particular device record as being associated with device 408, 410, or 412, respectively. Each of these device records may correlate with location information that is associated with the respective device. A device location record may indicate a device location, such as a physical location of a device, a geographical location of the device, and/or the like. For example, a device location record may contain physical coordinates for a device, the last known position of a device, a relative position of a device with respect to another device, and/or the like. For example, a device record associated with device 408 may comprise a data structure that indicates a relationship between device 408 and a particular physical location.

FIGURE 5A illustrates a set of device records. In the example of FIGURE 5A, each device record comprises a device identity and a device location. In the example of FIGURE 5A, each device identity is correlated with a particular device location. As can be seen in the example of FIGURE 5A, device identity 502 is correlated with device location 512, device identity 504 is correlated with device location 514, and device identity 506 is correlated with device location 516. In this manner, in the example of FIGURE 5A, device identity 502 and device location 512 are comprised by a single device record, device identity 504 and device location 514 are comprised by a single device record, and device identity 506 and device location 516 are comprised by a single device record.

In some circumstances, it may be desirable for a device record to correlate with additional information. For example, it may be desirable for the device record to correlate the device identity with device communication information. Device communication information may comprise information utilized for the purpose of communicating with a device identified by the device record. For example, device communication information may indicate that a particular device associated with a device record may communicate with a particular communication channel, such as wireless Ethernet, wired Ethernet, and/or the like, via a particular protocol such as Internet Protocol, Bluetooth, and/or the like, that the device is available to communicate at particular times, particular durations, and/or the like. In this manner, an apparatus may use information from a device record to assist in establishing a communication channel with a device.

FIGURE 5B illustrates a set of device records. In the example of FIGURE 5B, each device record comprises a device identity, a device location, and device communication information. In the example of FIGURE 5B, each device identity is correlated with a particular device location and particular device communication information. As can be seen in the example of FIGURE 5B, device identity 522 is correlated with device location 532 and device communication information 542, device identity 524 is correlated with device location 534 and device communication information 544, and device identity 526 is correlated with device location 536 and device communication information 546. In this manner, in the example of FIGURE 5B, device identity 522, device location 532, and device communication information 542 are comprised by a single device record; device identity 524 device location 534, and device communication information 544 are comprised by a single device record; and device identity 526, device location 536, and device communication information 546 are comprised by a single device record.

As previously described, in some circumstances, it may be desirable for a device record to correlate with additional information. For example, it may be desirable for the device record to correlate the device identity with a set of directive candidates, a device type, and/or the like. In at least one example embodiment, a directive candidate indicates an operation that a device is capable of performing. For example, a directive candidate may indicate an operation that a device is capable of performing by way of a message that is configured to invoke the operation on the device. An operation may be similar as described regarding FIGURE 4D. Some devices may be capable of performing certain operations, while other devices may be capable of supporting different operations. For example, a thermostat may be capable of performing climate control related operations, such as changing a set point, changing between a heating mode and a cooling mode, adjusting a fan speed, and/or the like. A light, however, may be unable to perform a climate control operation, but may be able to perform an operation related to dimming, brightening, turning on or off, and/or the like. An apparatus may determine what operations a device may perform by receiving a capability report, checking a device record, correlating a device type with predetermined operation, and/or the like. In at least one example embodiment, a directive candidate indicates an operation that the apparatus is capable of causing a device to perform. For example, an apparatus may be configured to invoke a light to turn on, invoke a thermostat to change a set point, invoke a set of curtains to close, and/or the like. In at least one example embodiment, a set of directive candidates comprises information that identifies one or more directives that are selectable for sending to a device. In at least one example embodiment, a set of directive candidates corresponds with a device identity. For example, a set of directive candidates may identify climate control directives that are selectable to send to a thermostat corresponding with the device identity associated with the set of directive candidates. In circumstances such as these, the apparatus may display a list of directive candidates for selection by a user. In this manner, the user may select a directive candidate, and the apparatus may send a directive to a device based, at least in part, on the user selection. For example, if the user is presented with a list of set point candidates corresponding with a thermostat, the user may select a change set point directive candidate. In this example, the apparatus may then send a change set point directive to the thermostat.

As previously described, it may be desirable for the device record to correlate the device identity with a device type. For example, device type may be used to identify what operations device associated with a device record are capable of performing. In at least one example embodiment, the device type comprises information that identifies a physical classification of a device that corresponds with the device identity. For example, a device type may identify a physical classification of a device, such as a display, a light, a control panel, and/or the like. In at least one example embodiment, the physical classification is indicative of at least one user identifiable characteristic of the device that corresponds with the device identity. For example, device type may refer to a physical characteristic of a display that indicates the display's resolution, may indicate the luminosity of a light, and/or the like.

FIGURE 5C illustrates a set of device records. In the example of FIGURE 5C, each device record comprises a device identity, a device location, device communication information, a set of directive candidates, and a device type. In the example of FIGURE 5C, each device identity is correlated with a particular device location, particular device communication information, a particular set of directive candidates, and a particular device type. In the example of FIGURE 5C, device identity 552 is correlated with device location 562, device communication information 572, set of directive candidates 582, and device type 592; device identity 554 is correlated with device location 564, device communication information 574, set of directive candidates 584, and device type 594; and device identity 556 is correlated with device location 566, device communication information 576, set of directive candidates 586, and device type 596. In this manner, in the example of FIGURE 5C, device identity 552, device location 562, device communication information 572, set of directive candidates 582, and device type 592 are comprised by a single device record; device identity 554, device location 564, device communication information 574, set of directive candidates 584, and device type 594 are comprised by a single device record; and device identity 556, device location 566, device communication information 576, set of directive candidates 586, and device type 596 are comprised by a single device record.

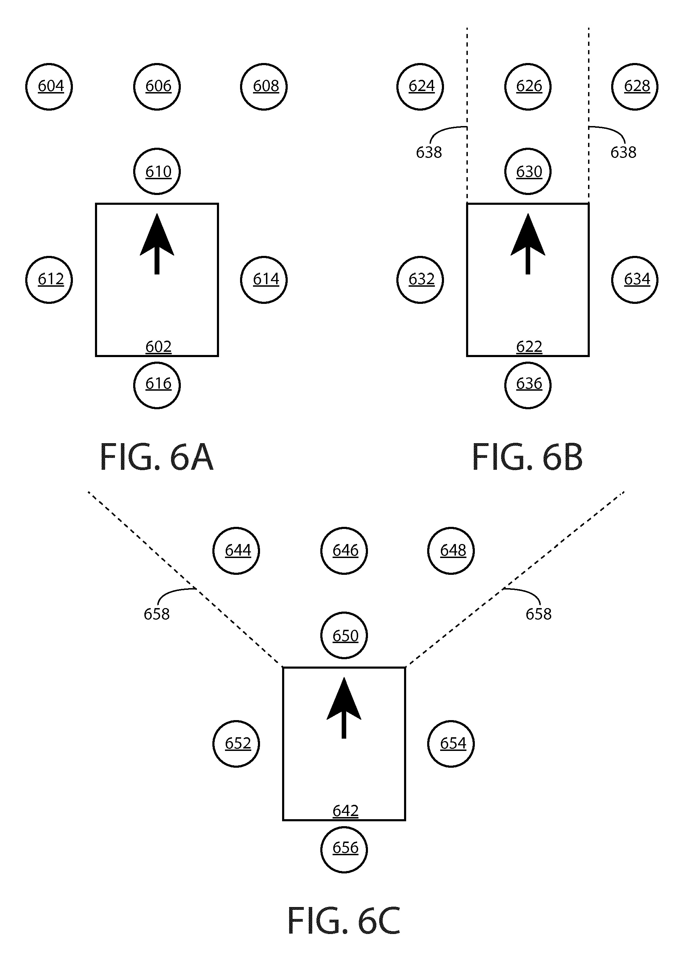

FIGURES 6A-6E are diagrams illustrating a selection location region according to at least one example embodiment. The examples of FIGURES 6A-6E are merely examples and do not limit the scope of the claims. For example, the size of the location region may vary, the shape of the location region may vary, the number of location regions may vary, and/or the like.

As previously described, it may be desirable for an apparatus to utilize an apparatus location or the apparatus orientation to determine which devices a user is most likely to interact with. For example, a user may wish for the apparatus to send a directive to a device within the vicinity of the apparatus. In some circumstances, it may be desirable for the apparatus to determine a selection location region. The determination may be based, at least in part, on the orientation of the apparatus and the apparatus location. In circumstances such as these, a selection location region may refer to a region beyond the apparatus location that extends in a direction that corresponds with the orientation of the apparatus. In at least one example embodiment, the orientation of the apparatus indicates a direction that corresponds with a reference direction associated with the apparatus. For example, the reference direction may be a predetermined direction from a predetermined part of the apparatus, such as a direction normal to a surface of the apparatus, such as the top of the apparatus, the back of the apparatus, and/or the like, the aimed direction of a camera module comprised by the apparatus, and/or the like. It should be understood that an apparatus location region may be two dimensional, three dimensional, may extend infinitely in a particular direction, may have boundaries on all sides, and/or the like.

FIGURE 6A illustrates an apparatus 602. In the example of FIGURE 6A, Apparatus 602 has an orientation indicated by an arrow illustrated on apparatus 602. In the example of FIGURE 6A, apparatus 602 is surrounded by devices 604, 606, 608, 610, 612, 614, and 616.

As previously described, it may desirable for an apparatus to determine a selection location region. For example, it may be desirable to determine a selection location region that includes a subset of device 604, 606, 608, 610, 612, 614, and 616 such that only some of the devices are included in the subset. For example, it may be desirable to determine a selection location region beyond the apparatus location that extends in a direction that corresponds with the orientation of the apparatus. In this manner, the selection location region may exclude devices that are not in a direction that corresponds with the orientation of the apparatus.

In some circumstances, it may be desirable to determine a subset of device records. For example, it may be desirable to determine a subset of device records such that each device record of the subset of device records comprises a device location record that indicates a device location within the selection location region. In this manner, the subset of device records may exclude device records that indicate device locations outside the selection region. For example, this may make the apparatus more efficient when processing device records, may make lists generated from the subset less cluttered when displayed than a complete list of device records, and/or the like. In at least one example embodiment, the determination of the subset of device records excludes device records of the set of device records that comprise a device location record that indicates a device location beyond the selection location region from the subset of device records.

FIGURE 6B illustrates an apparatus 622. In the example of FIGURE 6B, Apparatus 622 has an orientation indicated by an arrow illustrated on apparatus 622. In the example of FIGURE 6B, apparatus 622 is surrounded by devices 624, 626, 628, 630, 632, 634, and 636. In the example of FIGURE 6B, selection location region 638 extends in a direction that corresponds with the orientation apparatus 622. For instance, it can be seen that selection location 638 extends from apparatus 622 in the direction of the arrow illustrated on apparatus 622. In this manner, as can be seen in the example of FIGURE 6B, devices 626 and 630 are included within selection location region 638, while devices 624, 628, 632, 634, and 636 are excluded from selection location region 638. In the example of FIGURE 6B, a subset of device records determined from selection location region 638 may include device records associated with devices 626 and 630, while excluding device records associated with devices 624, 628, 632, 634, and 636.

In some circumstances, it may be desirable for a selection location region to be bounded by the apparatus location. For example, the apparatus may comprise a camera module. In circumstances such as these, the selection location region may be bounded by the apparatus location in a manner such that the selection location region is comprised by a field of view of the camera module. For example, the selection location region may exclude devices that are not within the field of view of a camera module comprised by the apparatus. In circumstances such as these, the selection location region may be bounded by a predetermined angle from the direction that corresponds with the orientation of the apparatus. For example, the field of view of a camera module may have a predetermined angle associated with a field of view, or the field of view may be adjustable, such as with a zoom lens. For instance, if a camera module has a fixed field of view of 45 degrees, a selection location region may be bounded by two rays originating from a common point, originating from different points associated with the camera module, and/or the like, that are separated by a 45 degree angle. In at least one example embodiment, the selection location region corresponds with at least a portion of camera information received from a camera module. For example, the selection location region may correspond with an entire field of view of a camera module, a portion of a field of view of a camera module, and/or the like. For example, the selection location region may exclude a portion of the field of view of the camera module that extends beyond a certain angle from center.

FIGURE 6C illustrates an apparatus 642. In the example of FIGURE 6C, Apparatus 642 has an orientation indicated by an arrow illustrated on apparatus 642. In the example of FIGURE 6C, apparatus 642 is surrounded by devices 644, 646, 648, 650, 652, 654, and 656. In the example of FIGURE 6C, selection location region 658 bounded by the apparatus location of apparatus 642. For instance, it can be seen that selection location 658 extends from apparatus 642 bounded by an angle from a direction that corresponds with orientation of apparatus 642 as indicated by the arrow illustrated on apparatus 642. In this manner, as can be seen in the example of FIGURE 6C, devices 644, 646, 648, and 650 are included within selection location region 658, while devices 652, 654, and 656 are excluded from selection location region 658. In the example of FIGURE 6C, a subset of device records determined from selection location region 658 may include device records associated with devices 644, 646, 648, and 650, while excluding device records associated with devices 652, 654, and 656.

In some circumstances, it may be desirable for a selection location region to be bounded by a predetermined distance form an apparatus location. For example, it may be desirable to exclude devices that are near the apparatus, far from the apparatus, and/or the like. For example, it may be desirable for the selection location region to be bounded by a predetermined distance near the apparatus location such that devices near the apparatus are excluded. In another example, it may be desirable for the selection location region to be bounded by a predetermined distance beyond which a device is unlikely to be interacted with. In this manner, devices far from the apparatus location may be excluded from the selection location region.

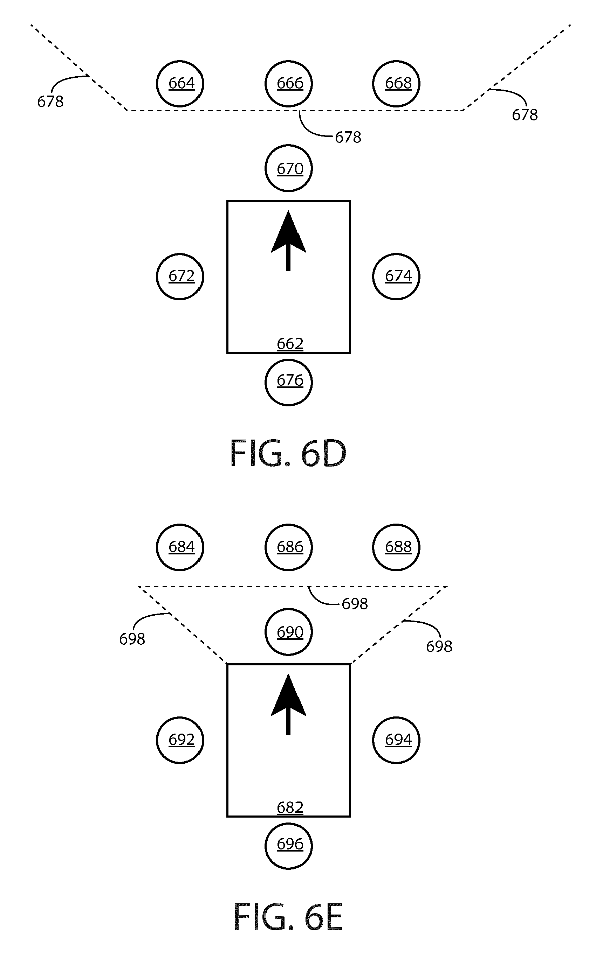

FIGURE 6D illustrates an apparatus 662. In the example of FIGURE 6D, Apparatus 662 has an orientation indicated by an arrow illustrated on apparatus 662. In the example of FIGURE 6D, apparatus 662 is surrounded by devices 664, 666, 668, 670, 672, 674, and 676. In the example of FIGURE 6D, selection location region 678 bounded by a near distance from the apparatus location of apparatus 662. For instance, it can be seen that selection location 678 extends from apparatus 662 by an angle from the direction that corresponds with the arrow illustrated on apparatus 662 beginning at a near distance in front of apparatus 662. In this manner, as can be seen in the example of FIGURE 6D, devices 664, 666, and 668 are included within selection location region 658, while devices 670, 672, 674, and 676 are excluded from selection location region 678. In the example of FIGURE 6D, a subset of device records determined from selection location region 678 may include device records associated with devices 674, 676, and 678, while excluding device records associated with devices 670, 672, 674, and 676.

FIGURE 6E illustrates an apparatus 682. In the example of FIGURE 6E, Apparatus 682 has an orientation indicated by an arrow illustrated on apparatus 682. In the example of FIGURE 6E, apparatus 682 is surrounded by devices 684, 686, 688, 690, 692, 694, and 696. In the example of FIGURE 6E, selection location region 698 bounded by a distant boundary from the apparatus location of apparatus 682. For instance, it can be seen that selection location 698 extends from apparatus 682 by an angle from the direction that corresponds with the arrow illustrated on apparatus 682 ending at boundary distant from apparatus 682. In this manner, as can be seen in the example of FIGURE 6E, device 690 is included within selection location region 698, while devices 684, 686, 688, 692, 664, and 696 are excluded from selection location region 698. In the example of FIGURE 6E, a subset of device records determined from selection location region 698 may include device records associated with device 690, while excluding device records associated with devices 684, 686, 688, 692, 694, and 696.

In some circumstances, it may be desirable for a selection location region to be bounded by the location of a physical boundary. For instance, it may be desirable to exclude devices beyond the physical boundary from the selection location region. For example, in the example of FIGURE 4B, location 422, and location 424 are separated by a physical boundary. In this example, it may be desirable to exclude devices 432 and 434 from a selection location region determined by apparatus 426. In circumstances such as these, the selection location region determined by apparatus 426 may use the physical boundary between location 422 and location 424 to determine the selection location region. In this manner, devices 432 and 434 may be excluded from the selection location region.

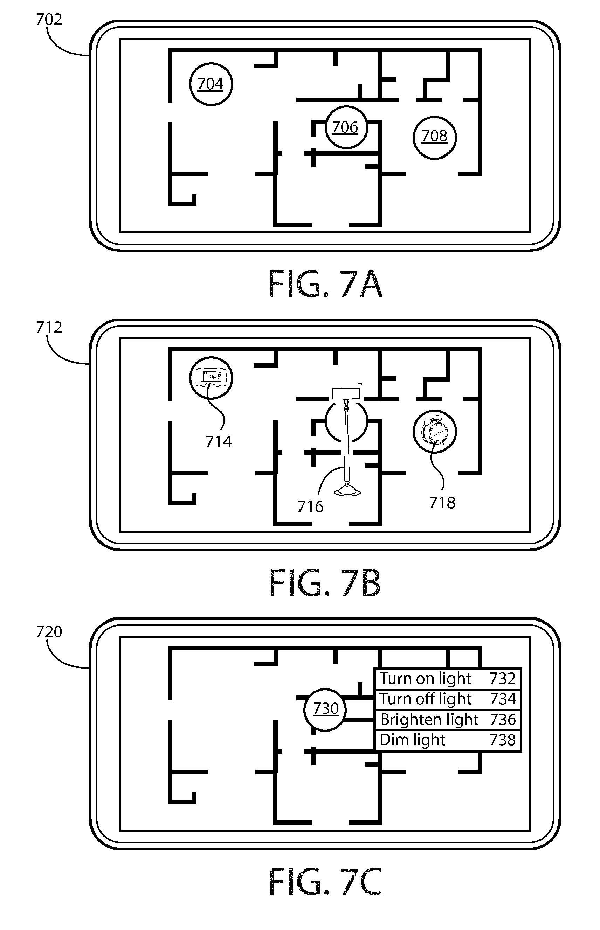

FIGURES 7A-7C are diagrams illustrating display of a set of device indicators according to at least one example embodiment. The examples of FIGURES 7A-7C are merely examples and do not limit the scope of the claims. For example, the number of device indicators may vary, the size of the device indicators may vary, the shape of the device indicators may vary, and/or the like.

In some circumstances, a user may be unsure what devices at or near a particular location are controllable by way of an apparatus. For example, some devices at a particular location may not have remote control capability, some devices may be obscured by a wall, a device visible to the user may be out of range, and or the like. In circumstances such as these, it may be desirable for the apparatus to identify which devices the user may currently control by way of the apparatus, where such devices are located, and/or the like. In this manner, a user may easily identify which devices may be controlled, where devices that may be controlled are located, and/or the like. For example, the apparatus may identify a device located in a particular room of a building, and display information about this device in relation to a floor plan of the building.

In some circumstances, it may be desirable for an apparatus to render a set of device indicators. For example, the device indicators may indicate to a user of the apparatus a selection of devices that may be controlled via the apparatus. For instance, the devices indicators may be indicative of devices that are within the control range of the apparatus, are located in the same room as the apparatus, and/or the like. In circumstances such as these, a device indicator may refer to any indicator, such as a visual indicator, an audio indicator, a haptic indicator, and/or the like associated with a device. For example, a device indicator may be any manner of visual emphasis that denotes a device, such as a visual icon displayed on a display, a change of color in a region of a display, a change of lighting, a change of graphical resolution, and/or the like. For instance, an apparatus may display an icon on a display representative of a type of apparatus, the location of an apparatus, and/or the like. In this manner, a user may quickly identify a particular apparatus that the user may desire to control by way of the apparatus. In at least one example embodiment, each device indicator of the set of device indicators corresponds with a device record of a subset of device records. In such an example embodiment, the device indicators may correspond with a subset of device records associated with a selection location region. In this manner, each device indicator may be associated with a particular device record. In at least one example embodiment, each device indicator is displayed at a position that represents a device location indicated by a device location record comprised by a device record that corresponds with the device indicator. For example, the position of a device indicator may be displayed toward the left side of a display when a device location indicated by a device location record associated with the device indicates that the device is to the left of the apparatus.

In some circumstances, it may be desirable for the device indicator to be superimposed over map information. For example, the map information may be representative of the location of the apparatus. For instance, the map information may represent a floor plan of a building, a map of a city, a position in three dimensional space, and/or the like In this manner, the device indicator may be displayed at a position with respect to the information such that the position of the device indicator corresponds with the device location with respect to the map information. For example, a device indicator may be displayed at a position on a floor plan that indicates the current room in a building the apparatus is located. In at least on example embodiment, the apparatus receives map information that corresponds with a selection location region. In this manner, the apparatus may display map information associated with the location region.

FIGURE 7A illustrates apparatus 702. As can be seen in the example of FIGURE 7A, apparatus 702 comprises a display. It can be seen that map information is currently being displayed on the display of apparatus 702. In the example of FIGURE 7A, apparatus 702 is also displaying device indicators 704, 706, and 708. In the example of FIGURE 7A, device indicators 704, 706, and 708 are displayed at positions with respect to the map information that correlate with their locations. For example, the device associated with device 704 may be at a location near a corner corresponding with the corner represented by the map information displayed on apparatus 702.

In some circumstances, it may be desirable for a device indicator to represent a device type. For example, if a device indicator represents a device type, a user viewing the device indicator may infer certain information about the device associated with the device indicator. For instance, if the device type is a thermostat, a user may infer that the device represented by the device indicator may be used to adjust a temperature set point. In at least one example embodiment, at least one device indicator of the set of device indicators represents a device type comprised by a device record that corresponds with the device indicator. In some circumstances, a device indicator may represent a device type by being displayed with a certain shape, color, as an icon, with associated text, and/or the like. A device indicator may not be limited to visual information to represent a device type. For example, a device indicator may be associated with a sound playback, a haptic feedback, and/or the like that indicates a device type.

FIGURE 7B illustrates apparatus 712. As can be seen in the example of FIGURE 7B, apparatus 712 comprises a display. It can be seen that map information is currently being displayed on the display of apparatus 712. In the example of FIGURE 7B, apparatus 712 is also displaying device indicators 714, 716, and 718. In the example of FIGURE 7B, device indicators 714, 716, and 718 are displayed at positions with respect to the map information that correlate with their locations. For example, the device associated with device 714 may be at a location near a corner corresponding with the corner represented by the map information displayed on apparatus 712. It can be seen that device indicators 714, 716, and 718 are displayed with associated icons. In this manner, device indicators 714, 716, and 718 may represent device types. For example, device indicator 708 may represent an alarm clock.

In some circumstances, it may be desirable for the apparatus to receive information indicative of a device selection input. For example, a device selection input may be indicative of a user desire to control a particular devices. In at least one example embodiment, the apparatus receives information indicative of a device selection input that identifies a device indicator as a selected device indicator. For example, a user may enter a touch input on the display of apparatus 702 illustrated in FIGURE 7A that correlates with the position of device indicator 704. In this example, such an input may indicate that device indicator 704 is a selected device indicator. In some circumstances, the device selection input may be an input other than a touch input. For example, the device selection input may be a gesture input, a voice input, a button press, a menu selection, and/or the like. In at least one example embodiment the apparatus determines that a device selection input identifies a device indicator as a selected device indicator.

In some circumstances, it may be desirable for an apparatus to display at least a portion set of directive candidates. For example, a user may have indicated a desire to control a device with the apparatus. For instance, a user may wish to control a device associated with a selected device indicator. In circumstances such as these, it may be desirable for the apparatus to display the portion of the set of directive candidates in response to the selection of a device indicator. In at least one example embodiment, the apparatus causes display of at least a portion of a set of directive candidates. For example, if the set of directive candidates associated with a device is short, the apparatus may display the entire set of directive candidates. If the set of directive candidates associated with a device is large, the apparatus may display a subset of the set of directive candidates.

FIGURE 7C illustrates apparatus 720. As can be seen in the example of FIGURE 7C, apparatus 720 comprises a display. It can be seen that map information is currently being displayed on the display of apparatus 720. In the example of FIGURE 7C, apparatus 720 is also displaying device indicator 730. In the example of FIGURE 7C, device indicator 730 may be a selected device indicator. Additionally, the example of FIGURE 7C illustrates a set of directive candidates that comprises directive candidates 732, 734, 736, and 738. The set of directive candidates illustrated in the example of FIGURE 7C is associated with device indicator 730.

In some circumstances, it may be desirable for an apparatus to receive information indicative of a directive candidate selection input. For example, a user may desire for a device to perform a certain operation identified by a particular directive candidate. For instance, a user may desire for device 730 as illustrated in FIGURE 7C to perform an operation associated with directive candidate 734. In at least on example embodiment, the apparatus receives information indicative of a directive candidate selection input that identifies a directive candidate of a set of directive candidates as a directive that a user of the apparatus desire to be sent to a particular device. For example, the device may be a device that corresponds with a previously selected device indicator. In this manner, the apparatus may send a directive to a device identified by a device record that corresponds with the selected device indicator. As such, the sending of the directive to the device that is identified by the device record may be based, at least in part, on the directive candidate selection input associated with the selected device indicator. In at least one example embodiment, the device record that corresponds with the selected device indicator comprises a set of directive candidates, and the set of directive candidates comprises the directive sent to the selected device. In at least on example embodiment, the apparatus receives information indicative of a directive candidate selection input that identifies a directive candidate of the set of directive candidates as the directive that should be sent to the selected device.

Even though map information is illustrated as two dimensional map information in the examples of FIGURES 7A-7C, in some circumstances map information may be three dimensional map information. For example, map information may be a perspective of a room, three dimensional camera information, and/or the like. In this manner, the apparatus may display the approximate location of a device in three dimensional space with respect to the map information. For example, if a device is located on a wall at a particular height from a floor, the apparatus may display a device indicator at a position on three dimensional map information at a position that correlates with the device's position on the wall above the floor. In some circumstances, it may be desirable for three dimensional map information to be displayed based, at least in part, on the orientation of the apparatus. For example, if the apparatus is oriented such that the apparatus is pointed at a particular direction in a room, it may be desirable to display a three dimensional perspective of the room on the device. In this manner, the map information may be representative of a perspective of the apparatus. In at least one example embodiment, the perspective of the map information is based, at least in part, on the orientation of the apparatus. In some circumstances, even though the perspective may be based, at least in part on the orientation of the apparatus, the physical elements represented by the map information may be obscured from the user of the apparatus, the apparatus, and/or the like. For example, the map information may be a perspective of a room that is obscured from the user and/or the apparatus by an intervening wall.

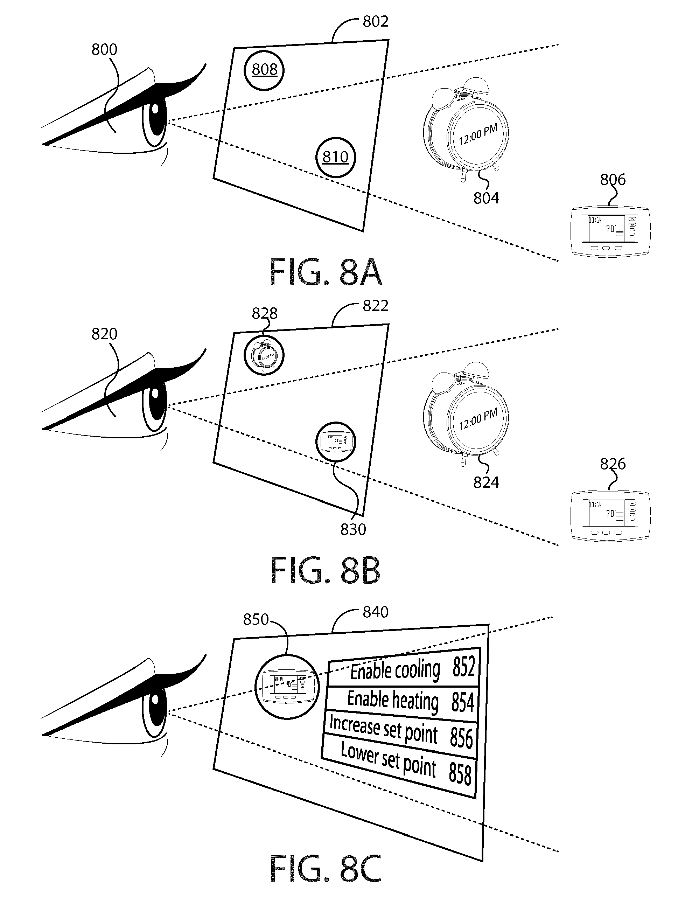

FIGURES 8A-8C are diagrams illustrating display of a set of device indicators according to at least one example embodiment. The examples of FIGURES 8A-8C are merely examples and do not limit the scope of the claims. For example, number of device indicators may vary, the size of the device indicators may vary, the shape of the device indicators may vary, and/or the like.

As previously described, in some circumstances, an apparatus may comprise a see through display. For example, the apparatus may have augmented reality features. In circumstances such as these, it may be desirable for the see through display to display device indicators similar as described in regards to FIGURES 7A-7C. Oftentimes, the view through a see through display may correspond with the field of view of a camera module. For example, a camera module may be configured to capture camera information such that the camera information corresponds with a field of view through the see through display. In circumstance such as these, it may be desirable to display a set of device indicators such that each device indicator is displayed at a position with respect to the camera information. For example, the device indicator may be displayed on the see through display such that it appears adjacent to a device that is viewable through the display. In this manner, the causation of display of the set of device indicators may be performed such that each device indicator is displayed at a position with respect to the camera information, such that the position represents a device location indicated by a device location record comprised by a device record that corresponds with the device indicator.

FIGURE 8A illustrates apparatus 802. In the example of FIGURE 8A, apparatus 802 comprises a see through display and a camera module. In the example of

FIGURE 8A, apparatus 802 is displaying device indicators 808 and 810. In the example of FIGURE 8A, devices 804 and 806 are viewable by user 800 through apparatus 802. In the example of FIGURE 8A, devices 804 and 806 may also be located within the field of view of the camera module. The field of view of the camera module may be identical to the field of view through the see through display, may be larger than the field of view through the see through display, may be smaller than the field of view through the see through display, and/or the like. In the example of FIGURE 8A, device indicator 708 is associated with device 804, and device indicator 810 is associated with device 806. In the example of FIGURE 8A, device indicator 828 is positioned at a position relative to device 824 as viewed through the see through display, and device indicator 830 is positioned at a position relative to device 826 as viewed through the see through display.

In circumstances in which an apparatus comprises a see through display, it may be desirable for device indicators displayed on the see through display to represent device types, similar as described regarding FIGURES 7A-7C.

FIGURE 8B illustrates apparatus 822. In the example of FIGURE 8B, apparatus 822 comprises a see through display and a camera module. In the example of FIGURE 8B, apparatus 822 is displaying device indicators 828 and 830. In the example of FIGURE 8B, devices 824 and 826 are viewable by user 820 through apparatus 822. In the example of FIGURE 8B, devices 824 and 826 are also within the field of view of the camera module such that the field of view of the camera module may be identical to the field of view through the see through display may be larger than the field of view through the see through display, may be smaller than the field of view through the see through display, and/or the like. In the example of FIGURE 8B, device indicator 828 is associated with device 824, and device indicator 830 is associated with device 826. In the example of FIGURE 8B, device indicators 828 and 830 may be representative of device types of the associated devices, similar as described regarding FIGURES 7A-7C. In the example of FIGURE 8B, device indicator 828 is positioned at a position relative to device 824 as viewed through the see through display, and device indicator 830 is positioned at a position relative to device 826 as viewed through the see through display.

In circumstances in which an apparatus comprises a see through display, it may be desirable for the see through display to display at least a portion of a set of directives, similar as described regarding FIGURES 7A-7C.

FIGURE 8C illustrates apparatus 840. In the example of FIGURE 8C, apparatus 840 comprises a see through display. In the example of FIGURE 8C, apparatus 840 is displaying device indicator 850. In the example of FIGURE 8C, device indicator 850 may be a selected device indicator. Additionally, FIGURE 8C illustrates a set of directive candidates comprising directive candidates 852, 854, 856, and 858. The set of directive candidates illustrated in FIGURE 8C may be associated with device indicator 850.

Even though apparatuses 802, 822, and 840 of FIGURES 8A-8C are described as comprising a see through display, the apparatus may comprise a non-see through display, the apparatus may not comprise a see through display, and/or the like. For example, the apparatus may comprise a non-see through display similar as described regarding FIGURES 3A-3C. In such circumstances, the apparatus may cause display of additional information, such as camera information, computer generated imagery, and/or the like, in relation to device indicators. For instance, the apparatus may cause display of representations of objects, similar as described regarding FIGURES 3A-3C, in relation to device indicators.

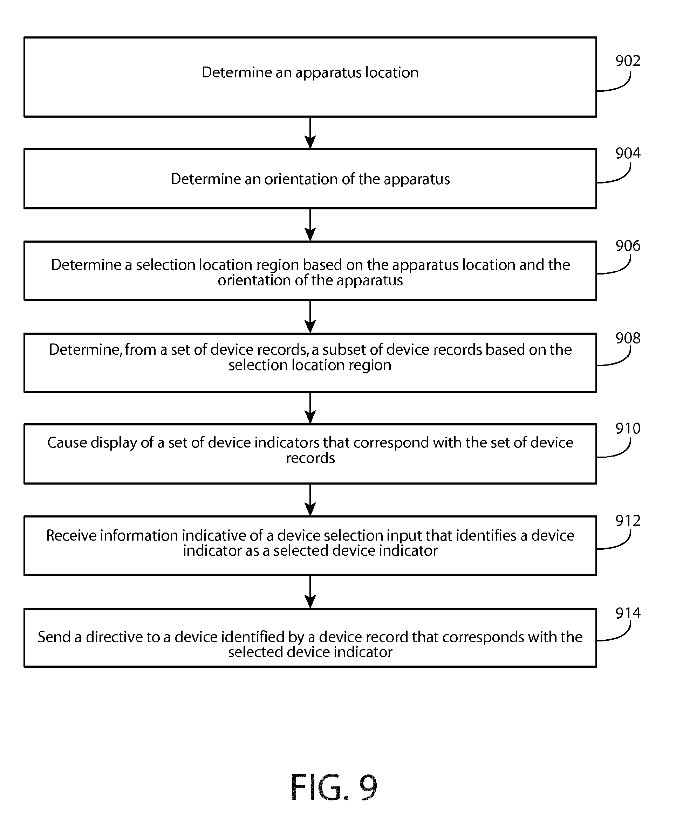

FIGURE 9 is a flow diagram illustrating activities associated with sending of a directive to a device according to at least one example embodiment. In at least one example embodiment, there is a set of operations that corresponds with the activities of FIGURE 9. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 9.

At block 902, the apparatus determines an apparatus location. The determination, the apparatus, and the apparatus location may be similar as described regarding FIGURE 1, FIGURES 3A-3C, and FIGURES 4A-4C.

At block 904, the apparatus determines an orientation of the apparatus. The determination and the orientation may be similar as described regarding FIGURES 4A-4C and FIGURES 6A-6E.

At block 906, the apparatus determines selection location region. In this manner, the determination of the selection location region may be based, at least in part, on the orientation of the apparatus and the apparatus location. The determination and the selection location region may be similar as described regarding FIGURES 4A-4C and FIGURES 6A-6E.

At block 908, the apparatus determines, from a set of device records, a subset of device records. Each device record of the subset of device records comprises a device location record that indicates a device location within the selection location region. In this manner, the determination of the subset of device records may be based, at least in part, on the selection location region. The determination, the set of device records, and the subset of device records may be similar as described regarding FIGURES 4A-4C, FIGURES 5A-5C, and FIGURES 6A-6E.

At block 910, the apparatus causes display of a set of device indicators. In at least one example embodiment, each device indicator of the set of device indicators may correspond with a device record of the subset of device records. In this manner, each device indicator may be displayed at a position that represents a device location indicated by a device location record comprised by a device record that corresponds with the device indicator. The display and the set of device indicators may be similar as described regarding FIGURES 7A-7C and FIGURES 8A-8C.

At block 912, the apparatus receives of information indicative of a device selection input that identifies a device indicator as a selected device indicator. The receipt, the device selection input, and the selected device indicator may be similar as described regarding FIGURE 1, FIGURES 7A-7C, and FIGURES 8A-8C.

At block 914, the apparatus sends a directive to a device identified by a device record that corresponds with the selected device indicator. The sending, the directive, the device, and the device record may be similar as described regarding FIGURE 1, FIGURES 2A-2B, FIGURES 4A-4D, and FIGURES 5A-5C.

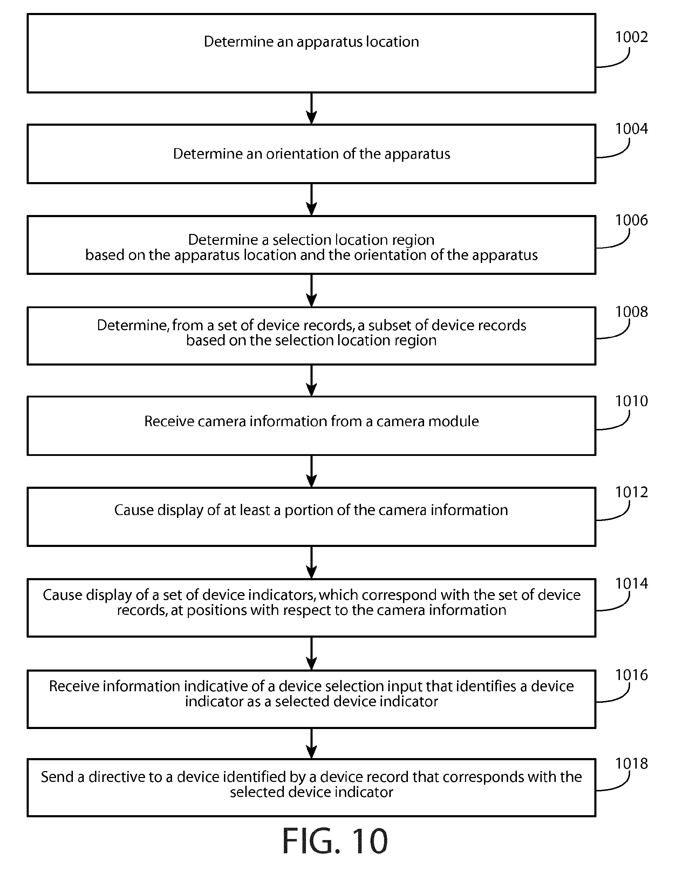

FIGURE 10 is a flow diagram illustrating activities associated with display of a set of device indicators according to at least one example embodiment. In at least one example embodiment, there is a set of operations that corresponds with the activities of FIGURE 10. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 10.

As previously described, in some circumstances, an apparatus may receive camera information from a camera module. In such circumstances, it may be desirable for the apparatus to cause display of a set of device indicators at positions with respect to the camera information.

At block 1002, the apparatus determines an apparatus location, similarly as described regarding block 902 of FIGURE 9. At block 1004, the apparatus determines an orientation of the apparatus, similarly as described regarding block 904 of FIGURE 9. At block 1006, the apparatus determines a selection location region based, at least in part, on the orientation of the apparatus and the apparatus location, similarly as described regarding block 906 of FIGURE 9. At block 1008, the apparatus determines, from a set of device records, a subset of device records based, at least in part, on the selection location region, similarly as described regarding block 908 of FIGURE 9.

At block 1010, the apparatus receives camera information from a camera module. In this manner, the selection location region may correspond with at least a portion of the camera information. The receipt, the camera information, and the camera module may be similar as described regarding FIGURE 1, FIGURES 3A-3C, and FIGURES 8A-8C.

At block 1012, the apparatus causes display of at least portion of the camera information. The display may be similar as described regarding FIGURES 3A-3C and FIGURES 8A-8C.

At block 1014, the apparatus causes display of a set of device indicators such that each device indicator is displayed at a position with respect to the camera information. In at least one example embodiment, each device indicator of the set of device indicators may correspond with a device record of the subset of device records. In this manner, each device indicator may be displayed with respect to the camera information at a position that represents a device location indicated by a device location record comprised by a device record that corresponds with the device indicator. The display and the set of device indicators may be similar as described regarding FIGURES 3A-3C and FIGURES 8A-8C.

At block 1016, the apparatus receives of information indicative of a device selection input that identifies a device indicator as a selected device indicator, similarly as described regarding block 912 of FIGURE 9. At block 1018, the apparatus sends a directive to a device identified by a device record that corresponds with the selected device indicator, similarly as described regarding block 914 of FIGURE 9.

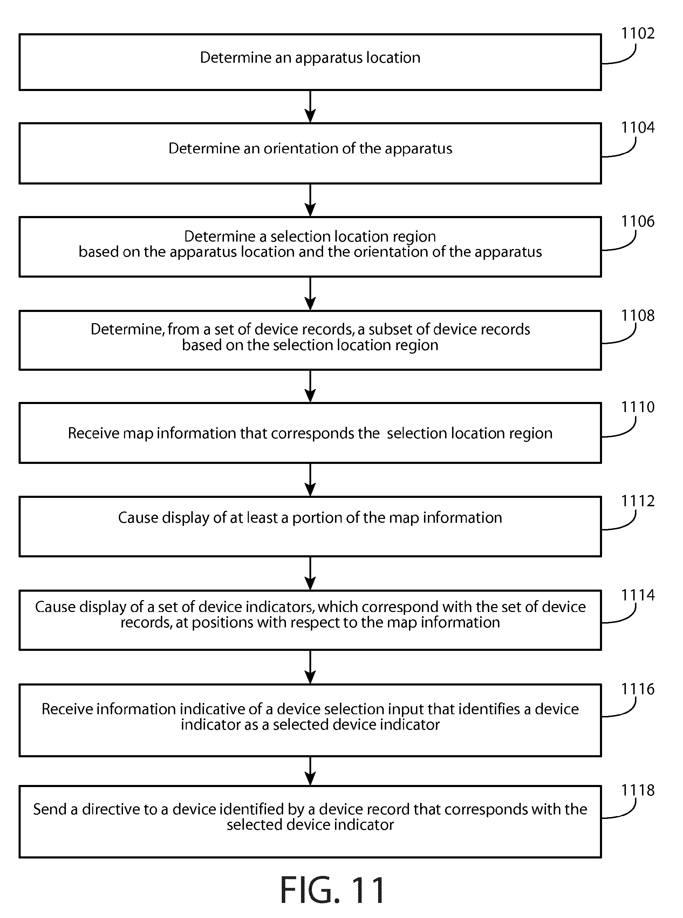

FIGURE 11 is a flow diagram illustrating activities associated with display of a set of device indicators according to at least one example embodiment. In at least one example embodiment, there is a set of operations that corresponds with the activities of FIGURE 11. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 11.

As previously described, in some circumstances, an apparatus may receive map information. In such circumstances, it may be desirable for the apparatus to cause display of a set of device indicators at certain positions relative to the map information.

At block 1102, the apparatus determines an apparatus location, similarly as described regarding block 902 of FIGURE 9. At block 1104, the apparatus determines an orientation of the apparatus, similarly as described regarding block 904 of FIGURE 9. At block 1106, the apparatus determines a selection location region based, at least in part, on the orientation of the apparatus and the apparatus location, similarly as described regarding block 906 of FIGURE 9. At block 1108, the apparatus determines, from a set of device records, a subset of device records based, at least in part, on the selection location region, similarly as described regarding block 908 of FIGURE 9.

At block 1110, the apparatus receives map information that corresponds with the selection location region. The receipt and the map information may be similar as described regarding FIGURES 7A-7C.

At block 1112, the apparatus causes display of at least a portion of the map information. The display may be similar as described regarding FIGURES 3A-3C and FIGURES 7A-7C.

At block 1114, the apparatus causes display of a set of device indicators such that each device indicator is displayed at a position with respect to the map information. In at least one example embodiment, each device indicator of the set of device indicators may correspond with a device record of the subset of device records. In this manner, each device indicator may be displayed with respect to the map information at a position that represents a device location indicated by a device location record comprised by a device record that corresponds with the device indicator. The display and the set of device indicators may be similar as described regarding FIGURES 3A-3C and FIGURES 7A-7C.

At block 1116, the apparatus receives of information indicative of a device selection input that identifies a device indicator as a selected device indicator, similarly as described regarding block 912 of FIGURE 9. At block 1118, the apparatus sends a directive to a device identified by a device record that corresponds with the selected device indicator, similarly as described regarding block 914 of FIGURE 9.

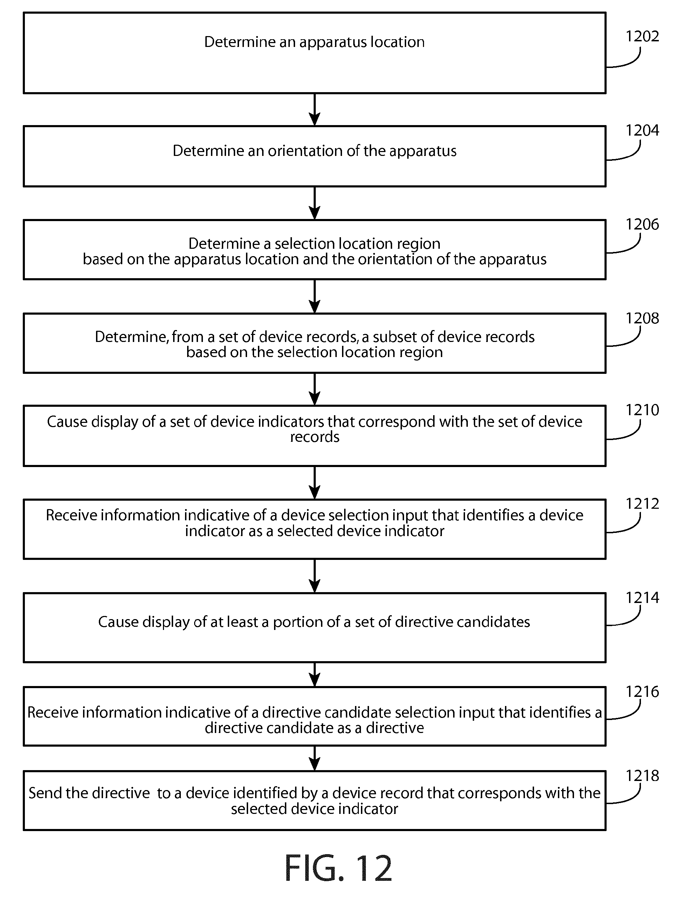

FIGURE 12 is a flow diagram illustrating activities associated with display of a set of directive candidates according to at least one example embodiment. In at least one example embodiment, there is a set of operations that corresponds with the activities of FIGURE 12. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 12.

As previously described, it may be desirable for the apparatus to cause display of at least a portion of a set of directive candidates.

At block 1202, the apparatus determines an apparatus location, similarly as described regarding block 902 of FIGURE 9. At block 1204, the apparatus determines an orientation of the apparatus, similarly as described regarding block 904 of FIGURE 9. At block 1206, the apparatus determines a selection location region based, at least in part, on the orientation of the apparatus and the apparatus location, similarly as described regarding block 906 of FIGURE 9. At block 1208, the apparatus determines, from a set of device records, a subset of device records based, at least in part, on the selection location region, similarly as described regarding block 908 of FIGURE 9. At block 1210, the apparatus causes display of a set of device indicators that correspond with the set of device records, similarly as described regarding block 910 of FIGURE 9. At block 1212, the apparatus receives of information indicative of a device selection input that identifies a device indicator as a selected device indicator, similarly as described regarding block 912 of FIGURE 9.

At block 1214, the apparatus causes display of at least a portion of a set of directive candidates. The display and the set of directive candidates may be similar as described regarding FIGURES 5A-5C, FIGURES 7A-7C, and FIGURES 8A-8C.

At block 1216, the apparatus receives information indicative of a directive candidate selection input that identifies a directive candidate of the set of directive candidates as a directive. The receipt, the directive candidate selection input, and the directive may be similar as described regarding FIGURE 1, FIGURES 2A-2B, FIGURES 5A-5C, FIGURES 7A-7C, and FIGURES 8A-8C. At block 1218, the apparatus sends a directive to a device identified by a device record that corresponds with the selected device indicator, similarly as described regarding block 914 of FIGURE 9.

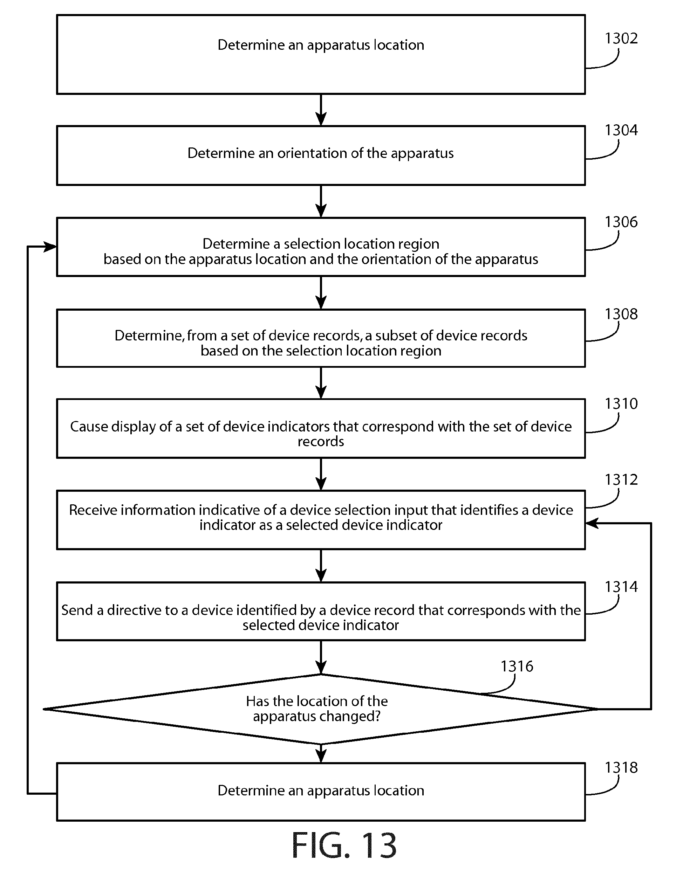

FIGURE 13 is a flow diagram illustrating activities associated with determination an apparatus location according to at least one example embodiment. In at least one example embodiment, there is a set of operations that corresponds with the activities of FIGURE 13. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 13.

In some circumstances, the location of an apparatus may change to a different apparatus location. In circumstances such as these, it may be desirable to determine a different selection location region. For example, the new location may be far removed from devices in the original selection location region. In circumstances such as these, the apparatus may cause to cause display of a different set of device indicators. For instance, the devices located within the different selection location region may be different than the devices in the original selection location region. Similarly, it may be desirable for the apparatus to determine a different subset of device records associated with the apparatuses in the different selection location region. For example, it may be desirable to add a device to the subset, remove a device from the subset, and/or the like. In this manner, the apparatus may send different directives to different devices within the different selection location region.

At block 1302, the apparatus determines an apparatus location, similarly as described regarding block 902 of FIGURE 9. At block 1304, the apparatus determines an orientation of the apparatus, similarly as described regarding block 904 of FIGURE 9. At block 1306, the apparatus determines a selection location region based, at least in part, on the orientation of the apparatus and the apparatus location, similarly as described regarding block 906 of FIGURE 9. At block 1308, the apparatus determines, from a set of device records, a subset of device records based, at least in part, on the selection location region, similarly as described regarding block 908 of FIGURE 9. At block 1310, the apparatus causes display of a set of device indicators that correspond with the set of device records, similarly as described regarding block 910 of FIGURE 9. At block 1312, the apparatus receives of information indicative of a device selection input that identifies a device indicator as a selected device indicator, similarly as described regarding block 912 of FIGURE 9. At block 1314, the apparatus sends a directive to a device identified by a device record that corresponds with the selected device indicator, similarly as described regarding block 914 of FIGURE 9.

At block 1316, the apparatus determines if the location of the apparatus has changed. The determination and the location of the apparatus may be similar as described regarding FIGURES 4A-4C. If the apparatus determines that the location of the apparatus has changed, flow proceeds to block 1318. If the apparatus determines that the location of the apparatus has not changed, flow proceeds to block 1312.

At block 1318, the apparatus determines an apparatus location. The determination and the apparatus location may be similar as described regarding FIGURES 4A-4C.

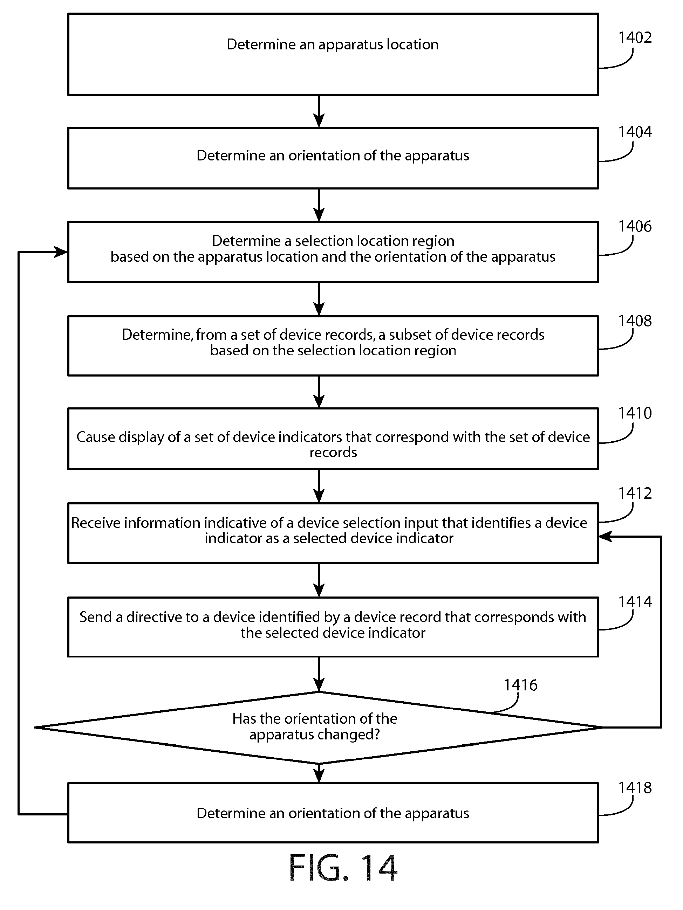

FIGURE 14 is a flow diagram illustrating activities associated with determination of an orientation of an apparatus according to at least one example embodiment. In at least one example embodiment, there is a set of operations that corresponds with the activities of FIGURE 14. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 14.

In some circumstances, the orientation of an apparatus may change to a different orientation of the apparatus. In circumstances such as these, it may be desirable to determine a different selection location region. For example, the new orientation of the apparatus may point the apparatus at different devices than the devices in the original selection location region. In circumstances such as these the apparatus may cause to cause display of a different set of device indicators. For instance, the devices located within the different selection location region may be different than the devices in the original selection location region. Similarly, it may be necessary for the apparatus to determine a different subset of device records associated with the apparatuses in the different selection location region. For example, the apparatus may need to add a device to the subset, remove a device from the subset, and/or the like. In this manner, the apparatus may send different directives to different devices within the different selection location region.

At block 1402, the apparatus determines an apparatus location, similarly as described regarding block 902 of FIGURE 9. At block 1404, the apparatus determines an orientation of the apparatus, similarly as described regarding block 904 of FIGURE 9. At block 1406, the apparatus determines a selection location region based, at least in part, on the orientation of the apparatus and the apparatus location, similarly as described regarding block 906 of FIGURE 9. At block 1408, the apparatus determines, from a set of device records, a subset of device records based, at least in part, on the selection location region, similarly as described regarding block 908 of FIGURE 9. At block 1410, the apparatus causes display of a set of device indicators that correspond with the set of device records, similarly as described regarding block 910 of FIGURE 9. At block 1412, the apparatus receives of information indicative of a device selection input that identifies a device indicator as a selected device indicator, similarly as described regarding block 912 of FIGURE 9. At block 1414, the apparatus sends a directive to a device identified by a device record that corresponds with the selected device indicator, similarly as described regarding block 914 of FIGURE 9.

At block 1416, the apparatus determines if the orientation of the apparatus has changed. The determination and the orientation of the apparatus may be similar as described regarding FIGURES 4A-4C and 6A-6E. If the apparatus determines that the orientation of the apparatus has changed, flow proceeds to block 1418. If the apparatus determines that the orientation of the apparatus has not changed, flow proceeds to block 1412.

At block 1418, the apparatus determines an orientation of the apparatus. The determination and the orientation may be similar as described regarding FIGURES 4A-4C and FIGURES 6A-6E.

Embodiments of the invention may be implemented in software, hardware, application logic, or a combination of software, hardware, and application logic. The software, application logic, and/or hardware may reside on the apparatus, a separate device, or a plurality of separate devices. If desired, part of the software, application logic, and/or hardware may reside on the apparatus, part of the software, application logic and/or hardware may reside on a separate device, and part of the software, application logic, and/or hardware may reside on a plurality of separate devices. In an example embodiment, the application logic, software or an instruction set is maintained on any one of various conventional computer-readable media.

If desired, the different functions discussed herein may be performed in a different order and/or concurrently with each other. For example, block 902 of FIGURE 9 may be performed after block 904 of FIGURE 9. Furthermore, if desired, one or more of the above-described functions may be optional or may be combined. For example, block 902 of FIGURE 9 may be optional and/or combined with block 904 of FIGURE 9.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are variations and modifications which may be made without departing from the scope of the present invention as defined in the appended claims.

## Claims

1. A method comprising:
determining an apparatus location that indicates a location of the apparatus;
determining an orientation of the apparatus;
determining a selection location region based, at least in part, on the orientation of the apparatus and the apparatus location;
determining, from a set of device records, a subset of device records such that each device record of the subset of device records comprises a device location record that indicates a device location within the selection location region;
causing display of a set of device indicators, each device indicator of the set of device indicators corresponding with a device record of the subset of device records, such that each device indicator is displayed at a position that represents a device location indicated by a device location record comprised by a device record that corresponds with the device indicator;
receiving information indicative of a device selection input that identifies a device indicator as a selected device indicator; and
sending a directive to a device identified by a device record that corresponds with the selected device indicator.

2. The method of claim 1, further comprising:
receiving location information, wherein the determination of the apparatus location is based, at least in part, on the location information.

3. The method of any of claims 1-2, further comprising:
receiving sensor information, wherein the determination of the orientation of the apparatus is based, at least in part, on the sensor information.

4. The method of any of claims 1-3, wherein the orientation of the apparatus indicates a direction that corresponds with a reference direction associated with the apparatus.

5. The method of claim 4, wherein the reference direction is a predetermined direction from a predetermined part of the apparatus.

6. The method of any of claims 1-5, wherein the selection location region is a region beyond the apparatus location that extends in a direction that corresponds with the orientation of the apparatus.

7. The method of any of claims 1-6, further comprising:
receiving camera information from a camera module, wherein the selection location region corresponds with at least a portion of the camera information; and
causing display of the portion of the camera information, wherein the causation of display of the set of device indicators is performed such that each device indicator is displayed at a position with respect to the camera information, such that the position represents a device location indicated by a device location record comprised by a device record that corresponds with the device indicator.

8. The method of any of claims 1-7, further comprising:
receiving map information that corresponds with the selection location region; and
causing display of at least a portion of the map information wherein the causation of display of the set of device indicators is performed such that each device indicator is displayed at a position with respect to the map information, such that the position represents a device location indicated by a device location record comprised by a device record that corresponds with the device indicator.

9. The method of any of claims 1-8, wherein the device record that corresponds with the selected device indicator comprises a set of directive candidates, and the set of directive candidates comprises the directive.

10. The method of claim 9, further comprising:
causing display of at least a portion of the set of directive candidates; and
receiving information indicative of a directive candidate selection input that identifies a directive candidate of the set of directive candidates as the directive.

11. The method of any of claims 1-10, further comprising:
determining that the location of the apparatus has changed to a different apparatus location;
determining a different selection location region based, at least in part, on the orientation of the apparatus and the different apparatus location;
determining, from the set of device records, a different subset of device records such that each device record of the different subset of device records comprises a device location record that indicates a device location within the different selection location region;
causing display of a different set of device indicators, each device indicator of the different set of device indicators corresponding with a device record of the different subset of device records, such that each device indicator is displayed at a position that represents a device location indicated by a device location record comprised by a device record that corresponds with the device indicator;
receiving information indicative of a device selection input that identifies a different device indicator as a different selected device indicator; and
sending a different directive to a different device identified by a device record that corresponds with the different selected device indicator.

12. The method of any of claims 1-10, further comprising:
determining that the orientation of the apparatus has changed to a different orientation of the apparatus;
determining a different selection location region based, at least in part, on the different orientation of the apparatus and the apparatus location;
determining, from the set of device records, a different subset of device records such that each device record of the different subset of device records comprises a device location record that indicates a device location within the different selection location region;
causing display of a different set of device indicators, each device indicator of the different set of device indicators corresponding with a device record of the different subset of device records, such that each device indicator is displayed at a position that represents a device location indicated by a device location record comprised by a device record that corresponds with the device indicator;
receiving information indicative of a device selection input that identifies a different device indicator as a different selected device indicator; and
sending a different directive to a different device identified by a device record that corresponds with the different selected device indicator.

13. An apparatus comprising means for performing the method of any of the preceding claims.

14. The apparatus of Claim 13, wherein the means for performing the method comprise at least one processor and at least one memory, the memory comprising machine-readable instructions, that when executed cause the apparatus to perform the method of any of claims 1-12.

15. At least one computer readable medium comprising instructions that, when executed, perform the method of any of claims 1-12.
